# EUROPEAN PATENT APPLICATION

(11) **EP 2 610 559 A2**
(43) Date of publication of application: **03.07.2013**
(21) Application number: 12199799.3
(22) Date of filing: 31.12.2012
(51) Int. Cl.: F24D 19/10, F24D 5/12, F24D 3/18, F24H 6/00, F24D 11/02, F24D 17/02

(54) **Heat pump and control method thereof**

(30) Priority: 02.01.2012 KR 20120000037; 21.12.2012 KR 20120150144
(71) Applicant: Samsung Electronics Co., Ltd, Gyeonggi-do 443-742 (KR)
(72) Inventor: Kim, Sung Tae, Gyeonggi-do (KR); Kim, Sung Goo, Gyeonggi-do (KR); Shin, Se Hoon, Gyeonggi-do (KR); Lee, Wook Jin, Seoul (KR); Cho, Sung Oug, Seoul (KR)
(74) Representative: Walaski, Jan Filip

(57) **Abstract**

Disclosed herein are a heat pump and a control method thereof. The heat pump includes an outdoor unit including a compressor, an outdoor heat exchanger, and a first expansion valve, an indoor unit including an indoor heat exchanger and a second expansion valve, a hydro unit including a hot water heat exchanger and a third expansion valve, the hydro unit heating or cooling water through heat exchange between a refrigerant and the water, a refrigerant flow path switching member to switch refrigerant flow paths among the compressor, the outdoor heat exchanger, the indoor unit, and the hydro unit such that simultaneous heating and cooling operations and/or simultaneous cooling and heating operations through the indoor unit and the hydro unit are performed in a heat recovery mode to recover and reuse residual heat, and a controller to control the refrigerant flow path switching member such that at least one of the simultaneous operations is performed in the heat recovery mode.

## Description

The disclosure relates to a heat pump in which an air conditioner and an environmentally friendly cooling/heating device are combined.

Generally, a heat pump includes an outdoor unit (a compressor, a single refrigerant flow path switching member for cooling/heating, an expansion device, and an outdoor heat exchanger), an indoor unit, and a hydro unit (a hot water heat exchanger).

In the heat pump with the above-stated construction, water in a storage tank is heated by the hydro unit, which is connected in parallel to the indoor unit, with the result that in the indoor unit and the hydro unit are not simultaneously operated in a heat recovery mode.

Also, cooling/heating using the indoor unit and cooling/heating using the hydro unit may not independently performed.

Furthermore, the performance of the hydro unit may be lowered due to a refrigerant collected in the indoor unit when the indoor unit is operated.

In an aspect of one or more embodiments, there is provided simultaneous performance of an air to air mode, which is a cooling/heating mode using an indoor unit, and an air to water mode, which is a cooling/heating mode using a hydro unit, in a heat recovery mode of a heat pump.

In an aspect of one or more embodiments, there is provided independent performance of an air to air mode, which is a cooling/heating mode using an indoor unit, and an air to water mode, which is a cooling/heating mode using a hydro unit, irrespective of a heat recovery mode of a heat pump.

In an aspect of one or more embodiments, there is provided prevention of the introduction of a refrigerant into an indoor unit, which is not operated, when an air to water heating mode, which is a heating mode using a hydro unit, is performed irrespective of a heat recovery mode of a heat pump.

In an aspect of one or more embodiments, there is provided performance of only heating in an air to water mode using a hydro unit. To this end, a refrigerant flow path switching member provided between the hydro unit and a compressor may be constituted by a one-way valve, thereby reducing cost and simplifying the structure of a heat pump.

In accordance with an aspect of one or more embodiments, there is provided a heat pump includes an outdoor unit including a compressor, an outdoor heat exchanger, and a first expansion valve, an indoor unit including an indoor heat exchanger and a second expansion valve, a hydro unit including a hot water heat exchanger and a third expansion valve, the hydro unit heating or cooling water through heat exchange between a refrigerant and the water, a refrigerant flow path switching member to switch refrigerant flow paths among the compressor, the outdoor heat exchanger, the indoor unit, and the hydro unit such that heating and/or cooling through the indoor unit and the hydro unit is performed in a heat recovery mode to recover and reuse residual heat, and a controller to control the refrigerant flow path switching member such that the heating and/or the cooling is performed in the heat recovery mode. The refrigerant flow path switching member may include a first valve to form a flow path between an outlet port of the compressor and the outdoor heat exchanger and a flow path between an inlet port of the compressor and the outdoor heat exchanger and to perform switching between the flow paths according to an operation mode, a second valve to form a flow path between the outlet port of the compressor and the indoor unit and a flow path between the inlet port of the compressor and the indoor unit and to perform switching between the flow paths according to an operation mode, and a third valve to form a flow path between the outlet port of the compressor and the hydro unit and a flow path between the inlet port of the compressor and the hydro unit and to perform switching between the flow paths according to an operation mode.

The refrigerant flow path switching member may include a first valve to form a flow path between an outlet port of the compressor and the outdoor heat exchanger and a flow path between an inlet port of the compressor and the outdoor heat exchanger and to perform switching between the flow paths according to an operation mode, a second valve to form a flow path between the outlet port of the compressor and the indoor unit and a flow path between the inlet port of the compressor and the indoor unit and to perform switching between the flow paths according to an operation mode, and a one-way valve to form a flow path between the outlet port of the compressor and the hydro unit and a flow path between the inlet port of the compressor and the hydro unit and to perform switching between the flow paths according to an operation mode.

In accordance with an aspect of one or more embodiments, there is provided a heat pump includes an outdoor unit including a compressor, an outdoor heat exchanger, and a first expansion valve, an indoor unit including an indoor heat exchanger and a second expansion valve, a hydro unit including a hot water heat exchanger and a third expansion valve, the hydro unit heating or cooling water through heat exchange between a refrigerant and the water, a refrigerant flow path switching member including a first valve to form a flow path between an outlet port of the compressor and the outdoor heat exchanger and a flow path between an inlet port of the compressor and the outdoor heat exchanger and to perform switching between the flow paths, a second valve to form a flow path between the outlet port of the compressor and the indoor unit and a flow path between the inlet port of the compressor and the indoor unit and to perform switching between the flow paths, and a third valve to form a flow path between the outlet port of the compressor and the hydro unit and a flow path between the inlet port of the compressor and the hydro unit and to perform switching between the flow paths, and a controller to control the first to third valves to perform switching between the flow paths such that simultaneous cooling and heating operations and/or simultaneous heating and cooling operations are performed in a heat recovery mode to recover and reuse residual heat.

The controller may control the first valve to form the flow path between the inlet port of the compressor and the outdoor heat exchanger, the second valve to form the flow path between the inlet port of the compressor and the indoor unit, and the third valve to form the flow path between the outlet port of the compressor and the hydro unit such that a refrigerant discharged from the compressor is supplied to both the outdoor heat exchanger and the indoor unit via the hydro unit, thereby simultaneously performing heating through the hydro unit (air to water heating) and cooling through the indoor unit (air to air cooling).

The controller may control opening degrees of the first expansion valve provided in the outdoor unit and the second expansion valve provided in the indoor unit to adjust flow rate of the refrigerant introduced into the outdoor unit and the indoor unit, thereby adjusting a heating capacity of the hydro unit and a cooling capacity of the indoor unit. The controller may control the first valve to form the flow path between the inlet port of the compressor and the outdoor heat exchanger, the second valve to form the flow path between the outlet port of the compressor and the indoor unit, and the third valve to form the flow path between the inlet port of the compressor and the hydro unit such that a refrigerant discharged from the compressor is supplied to both the outdoor heat exchanger and the hydro unit via the indoor unit, thereby simultaneously performing heating through the indoor unit (air to air heating) and cooling through the hydro unit (air to water cooling).

The controller may control opening degrees of the first expansion valve provided in the outdoor unit and the third expansion valve provided in the hydro unit to adjust flow rate of the refrigerant introduced into the outdoor unit and the hydro unit, thereby adjusting a heating capacity of the indoor unit and a cooling capacity of the hydro unit. The controller may control the first valve to form the flow path between the outlet port of the compressor and the outdoor heat exchanger, the second valve to form the flow path between the inlet port of the compressor and the indoor unit, and the third valve to form the flow path between the outlet port of the compressor and the hydro unit such that a refrigerant discharged from the compressor is supplied to the indoor unit via the outdoor heat exchanger and is directly supplied to the hydro unit, thereby simultaneously performing cooling through the indoor unit and heating through the hydro unit.

The controller may control opening degrees of the first expansion valve provided in the outdoor unit, the second expansion valve provided in the indoor unit, and the third expansion valve provided in the hydro unit to adjust flow rate of the refrigerant introduced into the hydro unit and the indoor unit, thereby adjusting a heating capacity of the hydro unit and a cooling capacity of the indoor unit.

The controller may control the first valve to form the flow path between the outlet port of the compressor and the outdoor heat exchanger, the second valve to form the flow path between the outlet port of the compressor and the indoor unit, and the third valve to form the flow path between the inlet port of the compressor and the hydro unit such that a refrigerant discharged from the compressor is supplied to the hydro unit via the outdoor heat exchanger and is directly supplied to the indoor unit, thereby simultaneously performing cooling through the hydro unit and heating through the indoor unit.

The controller may control opening degrees of the first expansion valve provided in the outdoor unit, the second expansion valve provided in the indoor unit, and the third expansion valve provided in the hydro unit to adjust flow rate of the refrigerant introduced into the hydro unit and the indoor unit, thereby adjusting a cooling capacity of the hydro unit and a heating capacity of the indoor unit.

The controller may control the first valve to form the flow path between the inlet port of the compressor and the outdoor heat exchanger, the second valve to form the flow path between the outlet port of the compressor and the indoor unit, the third valve to form the flow path between the inlet port of the compressor and the hydro unit, and the third expansion valve provided in the hydro unit to be closed such that a refrigerant discharged from the compressor is recovered to the outdoor unit via the indoor unit, thereby independently performing heating through the indoor unit.

The controller may control the first valve to form the flow path between the inlet port of the compressor and the outdoor heat exchanger, the second valve to form the flow path between the inlet port of the compressor and the indoor unit, the third valve to form the flow path between the outlet port of the compressor and the hydro unit, and the second expansion valve provided in the indoor unit to be closed such that a refrigerant discharged from the compressor is recovered to the outdoor unit via the hydro unit, thereby independently performing heating through the hydro unit.

The controller may control the first valve to form the flow path between the inlet port of the compressor and the outdoor heat exchanger, the second valve to form the flow path between the outlet port of the compressor and the indoor unit, and the third valve to form the flow path between the outlet port of the compressor and the hydro unit such that a refrigerant discharged from the compressor is supplied to both the indoor unit and the hydro unit, thereby performing heating through both the indoor unit and the hydro unit, and control opening degrees of the second expansion valve provided in the indoor unit and the third expansion valve provided in the hydro unit to adjust a heating capacity of the indoor unit and a heating capacity of the hydro unit.

If the sum of the heating capacity of the hydro unit and the heating capacity of the indoor unit exceeds 100 % a capacity of the outdoor unit, the controller may control all flow paths of the third valve to be closed while controlling the second valve to form the flow path between the outlet port of the compressor and the indoor unit such that supply of the refrigerant to the hydro unit is interrupted, thereby performing heating through the indoor unit first, and, when the heating through the indoor unit is performed to a predetermined level, the controller may control all flow paths of the second valve to be closed and the third valve to form the flow path between the outlet port of the compressor and the hydro unit, thereby performing heating through the hydro unit.

The controller may control the first valve to form the flow path between the outlet port of the compressor and the outdoor heat exchanger, the second valve to form the flow path between the inlet port of the compressor and the indoor unit, the third valve to form the flow path between the inlet port of the compressor and the hydro unit, and the third expansion valve provided in the hydro unit to be closed such that a refrigerant discharged from the compressor is supplied to the indoor unit via the outdoor heat exchanger, thereby independently performing cooling through the indoor unit.

The controller may control the first valve to form the flow path between the outlet port of the compressor and the outdoor heat exchanger, the second valve to form the flow path between the inlet port of the compressor and the indoor unit, the third valve to form the flow path between the inlet port of the compressor and the hydro unit, and the second expansion valve provided in the indoor unit to be closed such that a refrigerant discharged from the compressor is supplied to the hydro unit via the outdoor heat exchanger, thereby independently performing cooling through the hydro unit.
The controller may control the first valve to form the flow path between the outlet port of the compressor and the outdoor heat exchanger, the second valve to form the flow path between the inlet port of the compressor and the indoor unit, and the third valve to form the flow path between the inlet port of the compressor and the hydro unit such that a refrigerant discharged from the compressor is supplied to both the indoor unit and the hydro unit via the outdoor heat exchanger, thereby performing cooling through both the indoor unit and the hydro unit.

In accordance with an aspect of one or more embodiments, there is provided a control method of a heat pump including an outdoor unit, an indoor unit, and a hydro unit to heat or cool water through heat exchange between a refrigerant and the water includes controlling a first valve to form a flow path between an outlet port of the compressor and the outdoor heat exchanger and a flow path between an inlet port of the compressor and the outdoor heat exchanger and to perform switching between the flow paths according to an operation mode, controlling a second valve to form a flow path between the outlet port of the compressor and the indoor unit and a flow path between the inlet port of the compressor and the indoor unit and to perform switching between the flow paths according to an operation mode, controlling a third valve to form a flow path between the outlet port of the compressor and the hydro unit and a flow path between the inlet port of the compressor and the hydro unit and to perform switching between the flow paths according to an operation mode, and controlling the first, second, and third valves to perform switching between the flow paths such that simultaneous cooling and heating operations and/or simultaneous heating and cooling operations are performed in a heat recovery mode to recover and reuse residual heat. In accordance with an aspect of one or more embodiments, there is provided a heat pump includes an outdoor unit including a compressor, an outdoor heat exchanger, and a first expansion valve, an indoor unit including an indoor heat exchanger and a second expansion valve, a hydro unit including a hot water heat exchanger and a third expansion valve, the hydro unit heating or cooling water through heat exchange between a refrigerant and the water, a refrigerant flow path switching member including a first valve to form a flow path between an outlet port of the compressor and the outdoor heat exchanger and a flow path between an inlet port of the compressor and the outdoor heat exchanger and to perform switching between the flow paths, a second valve to form a flow path between the outlet port of the compressor and the indoor unit and a flow path between the inlet port of the compressor and the indoor unit and to perform switching between the flow paths, and a one-way valve to form a flow path between the outlet port of the compressor and the hydro unit and a flow path between the inlet port of the compressor and the hydro unit and to perform switching between the flow paths, and a controller to control the first valve and the one-way valve to perform switching between the flow paths such that simultaneous cooling and heating operations and/or simultaneous heating and cooling operations are performed in a heat recovery mode to recover and reuse residual heat.

The controller may control the first valve to form the flow path between the inlet port of the compressor and the outdoor heat exchanger, the second valve to form the flow path between the inlet port of the compressor and the indoor unit, and the one-way valve to form the flow path between the outlet port of the compressor and the hydro unit such that a refrigerant discharged from the compressor is supplied to both the outdoor heat exchanger and the indoor unit via the hydro unit, thereby simultaneously performing heating through the hydro unit (air to water heating) and cooling through the indoor unit (air to air cooling).

The controller may control opening degrees of the first expansion valve provided in the outdoor unit and the second expansion valve provided in the indoor unit to adjust flow rate of the refrigerant introduced into the outdoor unit and the indoor unit, thereby adjusting a heating capacity of the hydro unit and a cooling capacity of the indoor unit. The controller may control the first valve to form the flow path between the outlet port of the compressor and the outdoor heat exchanger, the second valve to form the flow path between the inlet port of the compressor and the indoor unit, and the one-way valve to form the flow path between the outlet port of the compressor and the hydro unit such that a refrigerant discharged from the compressor is supplied to the indoor unit via the outdoor heat exchanger and is directly supplied to the hydro unit, thereby simultaneously performing cooling through the indoor unit (air to air cooling) and heating through the hydro unit (air to water heating).

The controller may control opening degrees of the first expansion valve provided in the outdoor unit, the second expansion valve provided in the indoor unit, and the third expansion valve provided in the hydro unit to adjust flow rate of the refrigerant introduced into the hydro unit and the indoor unit, thereby adjusting a heating capacity of the hydro unit and a cooling capacity of the indoor unit.

The controller may control the first valve to form the flow path between the inlet port of the compressor and the outdoor heat exchanger, the second valve to form the flow path between the outlet port of the compressor and the indoor unit, the one-way valve to be closed such that the flow path between the inlet port of the compressor and the hydro unit is not formed, and the third expansion valve provided in the hydro unit to be closed such that a refrigerant discharged from the compressor is recovered to the outdoor unit via the indoor unit, thereby independently performing heating through the indoor unit (air to air heating).

The controller may control the first valve to form the flow path between the inlet port of the compressor and the outdoor heat exchanger, the second valve to form the flow path between the inlet port of the compressor and the indoor unit, the one-way valve to form the flow path between the outlet port of the compressor and the hydro unit, and the second expansion valve provided in the indoor unit to be closed such that a refrigerant discharged from the compressor is recovered to the outdoor unit via the hydro unit, thereby independently performing heating through the hydro unit (air to water heating).
The controller may control the first valve to form the flow path between the inlet port of the compressor and the outdoor heat exchanger, the second valve to form the flow path between the outlet port of the compressor and the indoor unit, and the one-way valve to form the flow path between the outlet port of the compressor and the hydro unit such that a refrigerant discharged from the compressor is supplied to both the indoor unit and the hydro unit, thereby performing heating through both the indoor unit and the hydro unit (air to air heating + air to water heating), and control opening degrees of the second expansion valve provided in the indoor unit and the third expansion valve provided in the hydro unit to adjust a heating capacity of the indoor unit and a heating capacity of the hydro unit.

If the sum of the heating capacity of the hydro unit and the heating capacity of the indoor unit exceeds 100 % a capacity of the outdoor unit, the controller may control all flow paths of the one-way valve to be closed while controlling the second valve to form the flow path between the outlet port of the compressor and the indoor unit such that supply of the refrigerant to the hydro unit is interrupted, thereby performing heating through the indoor unit first, and, when the heating through the indoor unit is performed to a predetermined level, the controller may control all flow paths of the second valve to be closed and the one-way valve to form the flow path between the outlet port of the compressor and the hydro unit, thereby performing heating through the hydro unit.

The controller may control the first valve to form the flow path between the outlet port of the compressor and the outdoor heat exchanger, the second valve to form the flow path between the inlet port of the compressor and the indoor unit, the one-way valve to be closed such that the flow path between the inlet port of the compressor and the hydro unit is formed, and the third expansion valve provided in the hydro unit to be closed such that a refrigerant discharged from the compressor is supplied to the indoor unit via the outdoor heat exchanger, thereby independently performing cooling through the indoor unit (air to air cooling).

In accordance with an aspect of one or more embodiments, there is provided a control method of a heat pump including an outdoor unit, an indoor unit, and a hydro unit to heat water through heat exchange between a refrigerant and the water includes controlling a first valve to form a flow path between an outlet port of the compressor and the outdoor heat exchanger and a flow path between an inlet port of the compressor and the outdoor heat exchanger and to perform switching between the flow paths according to an operation mode, controlling a second valve to form a flow path between the outlet port of the compressor and the indoor unit and a flow path between the inlet port of the compressor and the indoor unit and to perform switching between the flow paths according to an operation mode, controlling a one-way valve to form a flow path between the outlet port of the compressor and the hydro unit and to open or close the flow path according to an operation mode, and controlling the first valve, the second valve, and the one-way valve to perform switching between the flow paths such that simultaneous cooling and heating operations are performed in a heat recovery mode to recover and reuse residual heat. This control method may further provide controlling the one-way valve to form a sixth flow path between the inlet port of the compressor and the hydro unit and to open or close the flow path according to an operation mode, and controlling the first valve, the second valve, and the one-way valve to perform switching between the first through sixth flow paths such that simultaneous cooling and heating operations are performed in a heat recovery mode to recover and reuse residual heat.

These and/or other aspects of embodiments will become apparent and more readily appreciated from the following description of embodiments, taken in conjunction with the accompanying drawings in which:
FIG. 1 is a view showing a heat pump according to an embodiment;
FIG. 2 is a view showing a control system of the heat pump shown in FIG. 1;
FIG. 3 is a view showing a refrigerant cycle in a heat recovery heating mode when a heating capacity in an air to water heating mode is greater than a cooling capacity in an air to air cooling mode (air to water heating > air to air cooling);
FIG. 4 is a view showing a refrigerant cycle in a heat recovery heating mode when a heating capacity in an air to air heating mode is greater than a cooling capacity in an air to water cooling mode (air to air heating > air to water cooling);
FIG. 5 is a view showing a refrigerant cycle in a heat recovery cooling mode when a cooling capacity in an air to air cooling mode is greater than a heating capacity in an air to water heating mode (air to air cooling > air to water heating);
FIG. 6 is a view showing a refrigerant cycle in a heat recovery cooling mode when a cooling capacity in an air to water cooling mode is greater than a heating capacity in an air to air heating mode (air to water cooling > air to air heating);
FIG. 7 is a view showing a heating mode to heat air in an air conditioning space through an indoor unit (referred to as an air to air heating mode);
FIG. 8 is a view showing a heating mode to perform heating using heated water in a hydro unit (referred to as an air to water heating mode);
FIG. 9 is a view showing a combination heating mode in which an air to air heating mode and an air to water heating mode are simultaneously performed;
FIG. 10 is a view showing a cooling mode to cool air in an air conditioning space through an indoor unit to lower temperature in the air conditioning space (referred to as an air to air cooling mode);
FIG. 11 is a view showing a cooling mode to perform cooling using cooled water in a hydro unit (referred to as an air to water cooling mode);
FIG. 12 is a view showing a combination cooling mode in which an air to air cooling mode and an air to water cooling mode are simultaneously performed;
FIG. 13 is a view showing flow path switching of a first four-way valve, a second four-way valve, and a third four-way valve in the respective operation modes of the heat pump shown in FIGS. 3 to 12;
FIG. 14 is a view showing a heat pump according to an embodiment;
FIG. 15 is a view showing a control system of the heat pump shown in FIG. 14;
FIG. 16 is a view showing a refrigerant cycle in a heat recovery heating mode of the heat pump shown in FIG. 14 when a heating capacity in an air to water heating mode is greater than a cooling capacity in an air to air cooling mode (air to water heating > air to air cooling);
FIG. 17 is a view showing a refrigerant cycle in a heat recovery cooling mode of the heat pump shown in FIG. 14 when a cooling capacity in an air to air cooling mode is greater than a heating capacity in an air to water heating mode (air to air cooling > air to water heating);
FIG. 18 is a view showing a heating mode of the heat pump shown in FIG. 14 to heat air in an air conditioning space through an indoor unit (referred to as an air to air heating mode);
FIG. 19 is a view showing a heating mode of the heat pump shown in FIG. 14 to perform heating using heated water in a hydro unit (referred to as an air to water heating mode);
FIG. 20 is a view showing a combination heating mode of the heat pump shown in FIG. 14 in which an air to air heating mode and an air to water heating mode are simultaneously performed;
FIG. 21 is a view showing a cooling mode of the heat pump shown in FIG. 14 to cool air in an air conditioning space through an indoor unit to lower temperature in the air conditioning space (referred to as an air to air cooling mode); and
FIG. 22 is a view showing flow path switching of a first four-way valve, a second four-way valve, and a one-way valve in the respective operation modes of the heat pump shown in FIGS. 16 to 21.

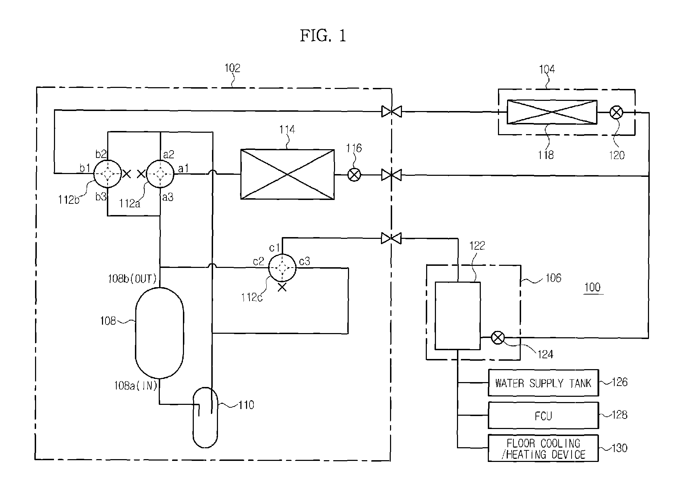

FIG. 1 is a view showing a heat pump 100 according to an embodiment. As shown in FIG. 1, the heat pump 100 includes an outdoor unit 102, an indoor unit 104, and a hydro unit 106. The outdoor unit 102, the indoor unit 104, and the hydro unit 106 are connected to one another via a refrigerant pipe to constitute a refrigerant cycle. The outdoor unit 102 includes a compressor 108, an accumulator 110, refrigerant flow path switching members 112a, 112b, and 112c, an outdoor heat exchanger 114, and a first expansion device 116. The refrigerant flow path switching members 112a, 112b, and 112c include a first four-way valve 112a, a second four-way valve 112b, and a third four-way valve 112c. The first expansion device 116 is realized by an electronic expansion valve. The first expansion device 116 expands a refrigerant, adjusts flow rate of the refrigerant, and interrupts flow of the refrigerant as needed. Another expansion device to perform the above functions may be used.

The compressor 108 compresses a low-temperature, low-pressure refrigerant, suctioned through an inlet port 108a, and discharges a high-temperature, high-pressure refrigerant through an outlet port 108b. The compressor 108 may include a single inverter compressor, the compression capacity of which is changed depending upon input frequencies, or a plurality of constant-speed compressors having a fixed compression capacity. The inlet port 108a of the compressor 108 is connected to the accumulator 110. The outlet port 108b of the compressor 108 is connected to the first four-way valve 112a, the second four-way valve 112b, and the third four-way valve 112c. The first four-way valve 112a, the second four-way valve 112b, and the third four-way valve 112c are also connected to the accumulator 110.

The refrigerant flow path switching members 112a, 112b, and 112c include the first four-way valve 112a, the second four-way valve 112b, and the third four-way valve 112c. The refrigerant flow path switching members 112a, 112b, and 112c selectively switch refrigerant flow paths in a heat recovery mode, a heating mode, and a cooling mode to secure refrigerant flow paths corresponding to the respective modes. The heat recovery mode is an operation mode to recover and reuse residual heat. A heat exchanger is used to recover heat.

The first four-way valve 112a performs switching between a flow path a1-a3 between the outlet port 108b of the compressor 108 and the outdoor heat exchanger 114 and a flow path a1-a2 between the inlet port 108a of the compressor 108 and the outdoor heat exchanger 114.

The second four-way valve 112b performs switching between a flow path b1-b3 between the outlet port 108b of the compressor 108 and the indoor unit 104 and a flow path b1-b2 between the inlet port 108a of the compressor 108 and the indoor unit 104.
The third four-way valve 112c performs switching between a flow path c1-c3 between the outlet port 108b of the compressor 108 and the hydro unit 106 and a flow path c1-c2 between the inlet port 108a of the compressor 108 and the hydro unit 106.
Each of the four-way valves 112a, 112b, and 112c has four ports, through which a refrigerant flows. In this embodiment, one of the ports is closed, and the other three ports are used. In FIG. 1, one port of each of the four-way valves 112a, 112b, and 112c denoted by X is closed. In this embodiment, therefore, three-way valves, each of which has a three port, may be used, or other valves functioning as the three-way valves may be also used. The refrigerant flow path switching members 112a, 112b, and 112c may be disposed inside or outside the outdoor unit 102.

The outdoor heat exchanger 114 functions as a condenser in a cooling mode and as an evaporator in a heating mode. The first expansion device 116 is connected to one side of the outdoor heat exchanger 114. At the outdoor heat exchanger 114 may be mounted an outdoor fan (not shown) to improve heat exchange efficiency between a refrigerant and outdoor air.

The indoor unit 104 includes an indoor heat exchanger 118 and a second expansion device 120. The indoor heat exchanger 118 functions as an evaporator in a cooling mode and as a condenser in a heating mode. The second expansion device 120 is connected to one side of the indoor heat exchanger 118. The second expansion device 120 is realized by an electronic expansion valve. The second expansion device 120 expands a refrigerant, adjusts flow rate of the refrigerant, and interrupts flow of the refrigerant as needed. Another expansion device to perform the above functions may be used. At the indoor heat exchanger 118 may be mounted an indoor fan (not shown) to improve heat exchange efficiency between a refrigerant and indoor air. According to circumstances, two or more indoor units 104 may be provided.

The hydro unit 106 heats/cools water through heat exchange between a refrigerant and water such that the heated/cooled water is used for heating/cooling. The hydro unit 106 includes a hot water heat exchanger 122 and a third expansion device 124. Refrigerant heat exchange plates, through which a refrigerant flows, and water heat exchange plates, through which water flows, are alternately arranged in the hot water heat exchanger 122. Cold water/hot water is generated through heat exchange between the refrigerant heat exchange plates and the water heat exchange plates. A refrigerant, compressed by the compressor 108, may be directly supplied to the hot water heat exchanger 122 of the hydro unit 106, or a refrigerant, having passed through the outdoor unit 102 or the indoor unit 104, may be supplied to the hot water heat exchanger 122 of the hydro unit 106. The cold water/hot water generated by the hydro unit 106 is supplied to a water supply tank 126, a fan coil unit 128, and floor cooling/heating device 130 such that the cold water/hot water is used for cold water/hot water supply and cooling/heating. The third expansion device 124 is realized by an electronic expansion valve. The third expansion device 124 expands a refrigerant, adjusts flow rate of the refrigerant, and interrupts flow of the refrigerant as needed. Another expansion device to perform the above functions may be used.

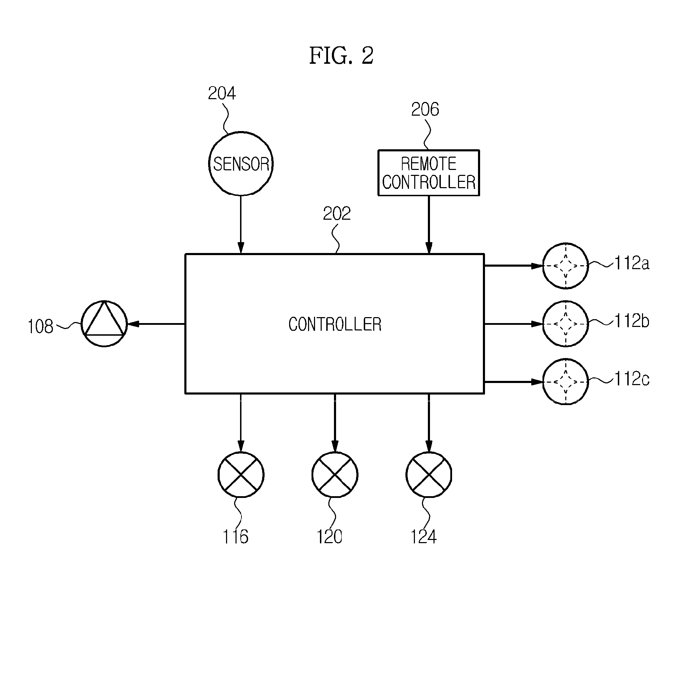

FIG. 2 is a view showing a control system of the heat pump shown in FIG. 1. As shown in FIG. 2, a controller 202 controls operations of the compressor 108, the first expansion device 116, the second expansion device 120, the third expansion device 124, the first four-way valve 112a, the second four-way valve 112b, and the third four-way valve 112c based on signals input from a sensor 204 and a remote controller 206. The heat pump 100 performs a heating mode operation, a cooling mode operation, and a heat recovery mode operation according to the control of the controller 202.
In this embodiment, an air to air mode is a cooling/heating mode using the indoor unit 104. In the air to air mode, cooling/heating is performed through heat exchange between a refrigerant and air in the indoor unit 104. Also, an air to water mode is a cooling/heating mode using the hydro unit 106. In the air to water mode, cooling/heating is performed through heat exchange between a refrigerant and water in the hot water heat exchanger 122 of the hydro unit 106. In the air to water mode, heat exchange may be performed between air and the water having been heat-exchanged with the refrigerant to perform cooling/heating.

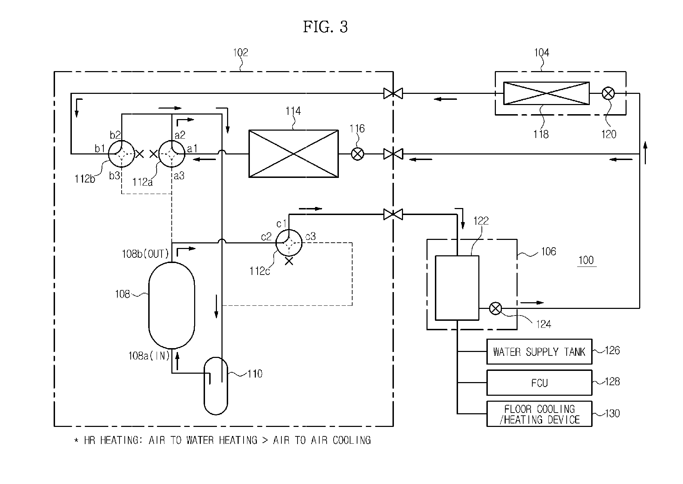

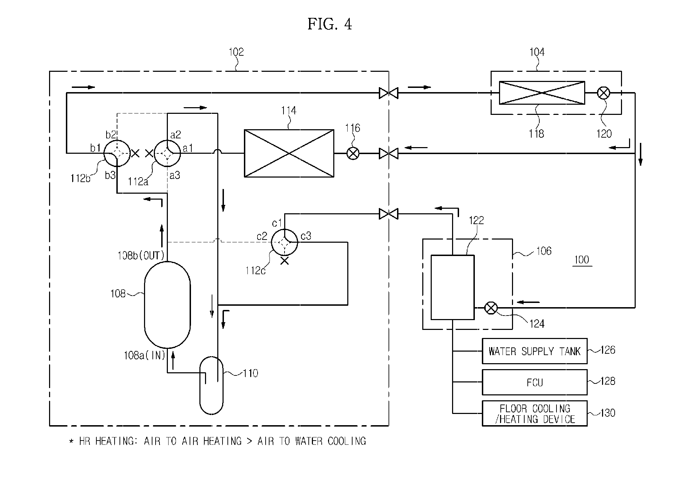

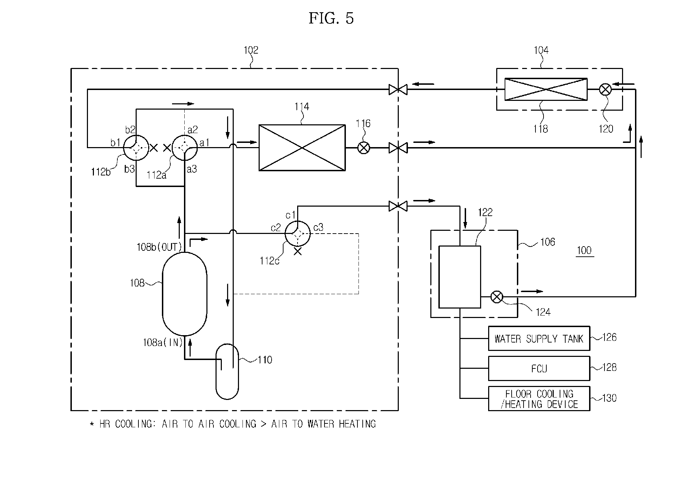

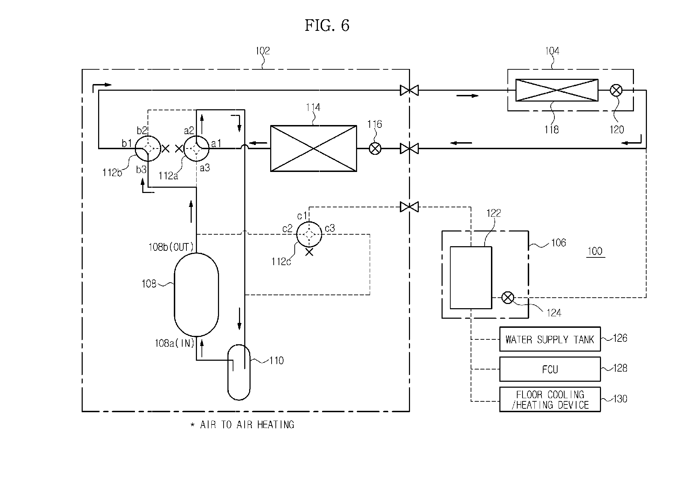

FIGS. 3 to 6 are views showing heat recovery heating and cooling modes of the heat pump according to an embodiment. FIGS. 3 and 4 show a heat recovery heating mode, and FIGS. 5 and 6 show a heat recovery cooling mode. In the heat recovery mode shown in FIGS. 3 to 6, the controller 202 controls the refrigerant flow path switching members 112a, 112b, and 112c to switch the refrigerant flow paths among the compressor 108, the outdoor heat exchanger 114, the indoor unit 104, and the hydro unit 106 such that simultaneous heating and cooling operations and/or simultaneous cooling and heating operations through the indoor unit 104 and the hydro unit 106 are performed.

### Heat recovery heating mode: air to water heating > air to air cooling

In the heat recovery heating mode shown in FIG. 3, the controller 202 of the heat pump 100 controls the first four-way valve 112a to form a flow path a1-a2 such that the heat pump 100 is operated in a heating mode. Also, the controller 202 controls the second four-way valve 112b to form a flow path b1-b2 such that a high-temperature, high-pressure refrigerant, discharged from the compressor 108, does not flow to the indoor unit 104. In addition, the controller 202 controls the third four-way valve 112c to form a flow path c1-c2 such that the high-temperature, high-pressure refrigerant, discharged from the compressor 108, flows to the hydro unit 106. As a result, the high-temperature, high-pressure refrigerant, discharged from the compressor 108, is supplied to the hydro unit 106, thereby performing air to water heating through the hydro unit 106. At this time, the refrigerant, heat-exchanged by the hydro unit 106, is supplied to the indoor unit 104 such that the refrigerant is used to perform an air to air cooling mode.

As shown in FIG. 3, the first four-way valve 112a, the second four-way valve 112b, and the third four-way valve 112c may be controlled such that air to water heating and air to air cooling are simultaneously performed in the heat recovery heating mode. Also, opening degrees of the first expansion device 116 provided in the outdoor unit 102 and the second expansion device 120 provided in the indoor unit 104 may be controlled to adjust flow rate of the refrigerant introduced into the outdoor unit 102 and the indoor unit 104. Consequently, an air to water heating capacity of the hydro unit 106 and an air to air cooling capacity of the indoor unit 104 may be freely combined without loss within a range equivalent to 100 % the capacity of the outdoor unit 102 (In FIG. 3, air to water heating > air to air cooling). Also, only the indoor unit 104 for the air to air mode is used without the provision of an additional indoor unit for the air to water mode, thereby greatly reduce product cost and installation cost, time, and labor.

### Heat recovery heating mode: air to air heating > air to water cooling

In the heat recovery heating mode shown in FIG. 4, the controller 202 of the heat pump 100 controls the first four-way valve 112a to form a flow path a1-a2 such that the heat pump 100 is operated in a heating mode. Also, the controller 202 controls the second four-way valve 112b to form a flow path b1-b3 such that a high-temperature, high-pressure refrigerant, discharged from the compressor 108, flows to the indoor unit 104. In addition, the controller 202 controls the third four-way valve 112c to form a flow path c1-c3 such that the high-temperature, high-pressure refrigerant, discharged from the compressor 108, does not flow to the hydro unit 106. As a result, the high-temperature, high-pressure refrigerant, discharged from the compressor 108, is supplied to the indoor unit 104, thereby performing air to air heating through the indoor unit 104. At this time, the refrigerant, temperature of which has been lowered due to heating operation of the indoor unit 104, is supplied to the hydro unit 106 such that the refrigerant is used to perform an air to water cooling mode.

As shown in FIG. 4, the first four-way valve 112a, the second four-way valve 112b, and the third four-way valve 112c may be controlled such that air to air heating and air to water cooling are simultaneously performed in the heat recovery heating mode. Also, opening degrees of the first expansion device 116 provided in the outdoor unit 102 and the third expansion device 124 provided in the hydro unit 106 may be controlled to adjust flow rate of the refrigerant introduced into the outdoor unit 102 and the hydro unit 106. Consequently, an air to air heating capacity and an air to water cooling capacity may be freely combined without loss within a range equivalent to 100 % the capacity of the outdoor unit 102 (In FIG. 4, air to air heating > air to water cooling). Also, only the indoor unit 104 for the air to air mode is used without the provision of an additional indoor unit for the air to water mode, thereby greatly reduce product cost and installation cost, time, and labor.

### Heat recovery cooling mode: air to air cooling > air to water heating

In the heat recovery cooling mode shown in FIG. 5, the controller 202 of the heat pump 100 controls the first four-way valve 112a to form a flow path a1-a3 such that the heat pump 100 is operated in a cooling mode. Also, the controller 202 controls the second four-way valve 112b to form a flow path b1-b2 such that a high-temperature, high-pressure refrigerant, discharged from the compressor 108, does not flow to the indoor unit 104. In addition, the controller 202 controls the third four-way valve 112c to form a flow path c1-c2 such that the high-temperature, high-pressure refrigerant, discharged from the compressor 108, flows to the hydro unit 106. As a result, the refrigerant, discharged from the compressor 108 and condensed by the outdoor heat exchanger 114, is supplied to the indoor unit 104, thereby performing air to air cooling. Also, the high-temperature, high-pressure refrigerant, discharged from the compressor 108, is supplied to the hydro unit 106, thereby performing air to water heating through the hydro unit 106. At this time, the refrigerant, temperature of which has been lowered by the hydro unit 106, is recovered to the compressor 108 via the indoor unit 104.

As shown in FIG. 5, the first four-way valve 112a, the second four-way valve 112b, and the third four-way valve 112c may be controlled such that air to air cooling and air to water heating are simultaneously performed in the heat recovery cooling mode. Also, opening degrees of the first expansion device 116 provided in the outdoor unit 102, the second expansion device 120 provided in the indoor unit 104, and the third expansion device 124 provided in the hydro unit 106 may be controlled to adjust flow rate of the refrigerant introduced into the hydro unit 106 and the indoor unit 104. Consequently, an air to water heating capacity and an air to air cooling capacity may be freely combined without loss within a range equivalent to 100 % the capacity of the outdoor unit 102 (In FIG. 5, air to air cooling > air to water heating). Also, only the indoor unit 104 for the air to air mode is used without the provision of an additional indoor unit for the air to water mode, thereby greatly reduce product cost and installation cost, time, and labor.

### Heat recovery cooling mode: air to water cooling > air to air heating

In the heat recovery cooling mode shown in FIG. 6, the controller 202 of the heat pump 100 controls the first four-way valve 112a to form a flow path a1-a3 such that the heat pump 100 is operated in a cooling mode. Also, the controller 202 controls the second four-way valve 112b to form a flow path b1-b3 such that a high-temperature, high-pressure refrigerant, discharged from the compressor 108, flows to the indoor unit 104. In addition, the controller 202 controls the third four-way valve 112c to form a flow path c1-c3 such that the high-temperature, high-pressure refrigerant, discharged from the compressor 108, does not flow to the hydro unit 106. As a result, the high-temperature, high-pressure refrigerant, discharged from the compressor 108, is supplied to the indoor unit 104, thereby performing air to air heating. Also, the high-temperature, high-pressure refrigerant, discharged from the compressor 108, is condensed by the outdoor heat exchanger 114 and is then supplied to the hydro unit 106, thereby performing air to water cooling through the hydro unit 106. At this time, the refrigerant, temperature of which has been lowered by the indoor unit 104, is recovered to the compressor 108 via the hydro unit 106.

As shown in FIG. 6, the first four-way valve 112a, the second four-way valve 112b, and the third four-way valve 112c may be controlled such that air to water cooling and air to air heating are simultaneously performed in the heat recovery cooling mode. Also, opening degrees of the first expansion device 116 provided in the outdoor unit 102, the second expansion device 120 provided in the indoor unit 104, and the third expansion device 124 provided in the hydro unit 106 may be controlled to adjust flow rate of the refrigerant introduced into the outdoor unit 102 and the indoor unit 104.

Consequently, an air to water cooling capacity and an air to air heating capacity may be freely combined without loss within a range equivalent to 100 % the capacity of the outdoor unit 102 (In FIG. 6, air to water cooling > air to air heating). Also, only the indoor unit 104 for the air to air mode is used without the provision of an additional indoor unit for the air to water mode, thereby greatly reduce product cost and installation cost, time, and labor.

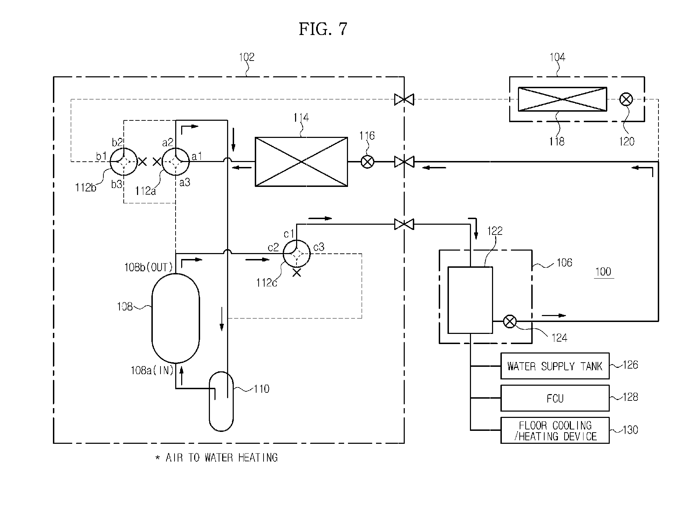

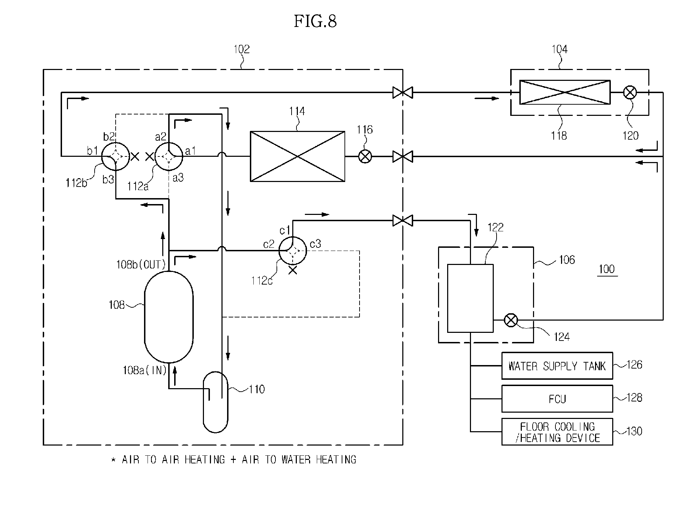

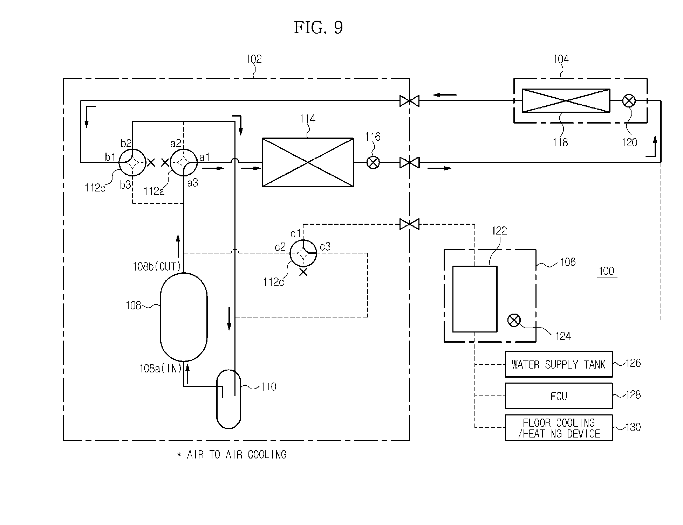

FIGS. 7 to 9 are views showing heating modes of the heat pump according to an embodiment. FIG. 7 is a view showing a heating mode to heat air in an air conditioning space through the indoor unit 104 (referred to as an air to air heating mode). FIG. 8 is a view showing a heating mode to perform heating using heated water in the hydro unit 106 (referred to as an air to water heating mode). FIG. 9 is a view showing a combination heating mode in which an air to air heating mode and an air to water heating mode are simultaneously performed.

### Air to air heating mode

In the air to air heating mode shown in FIG. 7, the controller 202 of the heat pump 100 controls the first four-way valve 112a to form a flow path a1-a2 such that the heat pump 100 is operated in a heating mode. Also, the controller 202 controls the second four-way valve 112b to form a flow path b1-b3 such that a high-temperature, high-pressure refrigerant, discharged from the compressor 108, flows to the indoor unit 104. In addition, the controller 202 controls the third four-way valve 112c to form a flow path c1-c3 such that the refrigerant is circulated between the outdoor unit 102 and the indoor unit 104. At this time, the third expansion device 124 of the hydro unit 106 is closed such that the refrigerant, having passed through the indoor unit 104, does not flow to the hydro unit 106. As a result, the high-temperature, high-pressure refrigerant, discharged from the compressor 108, is supplied only to the indoor unit 104, thereby independently performing air to air heating through the indoor unit 104. As shown in FIG. 7, only the air to air heating mode may be independently performed irrespective of the heat recovery cooling/heating modes.

### Air to water heating mode

In the air to water heating mode shown in FIG. 8, the controller 202 of the heat pump 100 controls the first four-way valve 112a to form a flow path a1-a2 such that the heat pump 100 is operated in a heating mode. Also, the controller 202 controls the second four-way valve 112b to form a flow path b1-b2 such that a high-temperature, high-pressure refrigerant, discharged from the compressor 108, does not flow to the indoor unit 104. In addition, the controller 202 controls the third four-way valve 112c to form a flow path c1-c2 such that the high-temperature, high-pressure refrigerant, discharged from the compressor 108, flows to the hydro unit 106. As a result, the high-temperature, high-pressure refrigerant, discharged from the compressor 108, is supplied only to the hydro unit 106, thereby independently performing air to water heating through the hydro unit 106.

As shown in FIG. 8, only the air to water heating mode may be independently performed irrespective of the heat recovery cooling/heating modes.

In the air to water heating mode, the indoor unit 104 is not used since heating is performed using the hydro unit 106. In FIG. 8, the second four-way valve 112b does not form a flow path b1-b3. As a result, the refrigerant, discharged from the compressor 108, does not flow to the indoor unit 104. If the refrigerant is introduced into the indoor unit 104, the amount of the refrigerant used for air to water heating is reduced in proportion to the amount of the refrigerant introduced into the indoor unit 104, whereby air to water heating efficiency is lowered. Even in a case in which only the air to water heating mode is independently performed, therefore, introduction of the refrigerant into the indoor unit 104 is interrupted by the second four-way valve 112b, thereby preventing lowering of air to water heating efficiency.

### Combination heating mode of air to air heating mode and air to water heating mode

In the combination heating mode, in which the air to air heating mode and the air to water heating mode are simultaneously performed, shown in FIG. 9, the controller 202 of the heat pump 100 controls the first four-way valve 112a to form a flow path a1-a2 such that the heat pump 100 is operated in a heating mode. Also, the controller 202 controls the second four-way valve 112b to form a flow path b1-b3 such that a high-temperature, high-pressure refrigerant, discharged from the compressor 108, flows to the indoor unit 104. In addition, the controller 202 controls the third four-way valve 112c to form a flow path c1-c2 such that the high-temperature, high-pressure refrigerant, discharged from the compressor 108, flows to the hydro unit 106. As a result, the high-temperature, high-pressure refrigerant, discharged from the compressor 108, is supplied to both the indoor unit 104 and the hydro unit 106, thereby simultaneously performing air to air heating through the indoor unit 104 and air to water heating through the hydro unit 106.

As shown in FIG. 9, the combination heating mode of the air to air heating mode and the air to water heating mode may be performed irrespective of the heat recovery cooling/heating modes. In this case, opening degrees of the first expansion device 116 provided in the outdoor unit 102 and the second expansion device 120 provided in the indoor unit 104 may be controlled to adjust flow rate of the refrigerant introduced into the outdoor unit 102 and the indoor unit 104. Consequently, an air to water heating capacity and an air to air heating capacity may be freely combined without loss within a range equivalent to 100 % the capacity of the outdoor unit 102. If the sum of the air to water heating capacity and the air to air heating capacity exceeds 100 % the capacity of the outdoor unit 102, the controller 202 controls all flow paths of the third four-way valve 112c to be closed while controlling the second four-way valve 112b to form the flow path b1-b3 such that the supply of the refrigerant to the hydro unit 106 is interrupted, thereby performing air to air heating first. When the air to air heating is performed to a predetermined level, the controller 202 controls all flow paths of the second four-way valve 112b to be closed and the third four-way valve 112c to form the flow path c1-c2, thereby performing air to water heating.

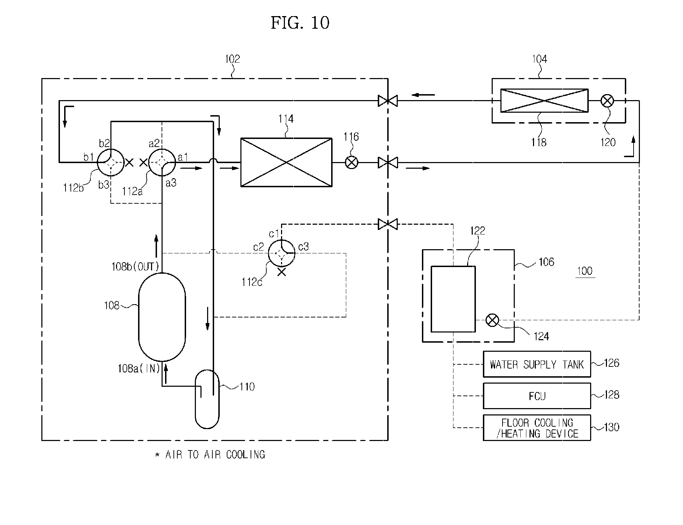

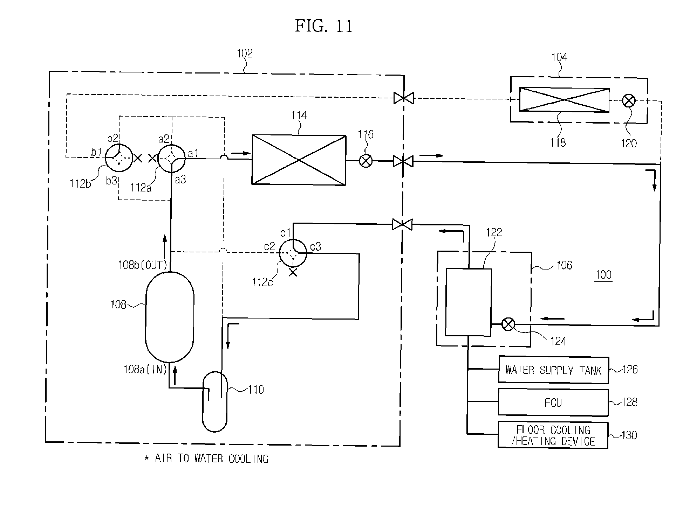

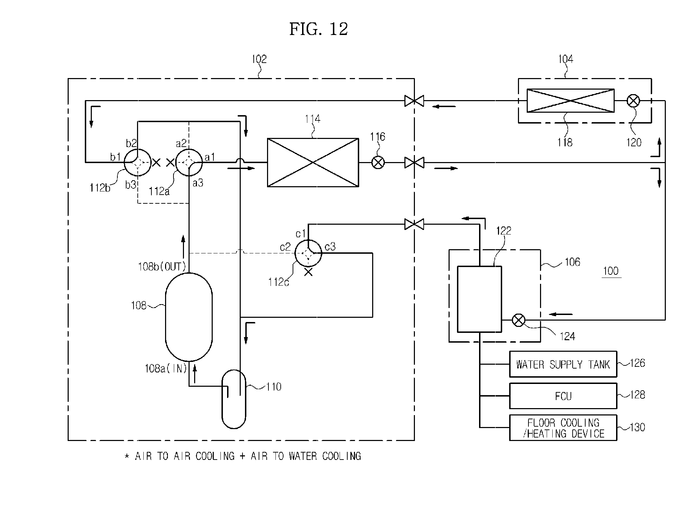

FIGS. 10 to 12 are views showing cooling modes of the heat pump according to an embodiment. FIG. 10 is a view showing a cooling mode to cool air in an air conditioning space through the indoor unit 104 to lower temperature in the air conditioning space (referred to as an air to air cooling mode). FIG. 11 is a view showing a cooling mode to perform cooling using cooled water in the hydro unit 106 (referred to as an air to water cooling mode). FIG. 12 is a view showing a combination cooling mode in which an air to air cooling mode and an air to water cooling mode are simultaneously performed.

### Air to air cooling mode

In the air to air cooling mode shown in FIG. 10, the controller 202 of the heat pump 100 controls the first four-way valve 112a to form a flow path a1-a3 such that the heat pump 100 is operated in a cooling mode. Also, the controller 202 controls the second four-way valve 112b to form a flow path b1-b2 such that a high-temperature, high-pressure refrigerant, discharged from the compressor 108, does not flow to the indoor unit 104. In addition, the controller 202 controls the third four-way valve 112c to form a flow path c1-c3 such that the high-temperature, high-pressure refrigerant, discharged from the compressor 108, does not flow to the hydro unit 106. At this time, the third expansion device 124 of the hydro unit 106 is completely closed such that the refrigerant, discharged from the compressor 108 and condensed by the outdoor heat exchanger 114, is supplied only to the indoor unit 104, thereby independently performing air to air cooling through the indoor unit 104.

As shown in FIG. 10, only the air to air cooling mode may be independently performed irrespective of the heat recovery cooling/heating modes.

### Air to water cooling mode

In the air to water cooling mode shown in FIG. 11, the controller 202 of the heat pump 100 controls the first four-way valve 112a to form a flow path a1-a3 such that the heat pump 100 is operated in a cooling mode. Also, the controller 202 controls the second four-way valve 112b to form a flow path b1-b2 such that a high-temperature, high-pressure refrigerant, discharged from the compressor 108, does not flow to the indoor unit 104. In addition, the controller 202 controls the third four-way valve 112c to form a flow path c1-c3 such that the high-temperature, high-pressure refrigerant, discharged from the compressor 108, does not flow to the hydro unit 106. At this time, the second expansion device 120 of the indoor unit 104 is completely closed such that the refrigerant, discharged from the compressor 108 and condensed by the outdoor heat exchanger 114, is supplied only to the hydro unit 106, thereby independently performing air to water cooling through the hydro unit 106.

As shown in FIG. 11, only the air to water cooling mode may be independently performed irrespective of the heat recovery cooling/heating modes.

### Combination cooling mode of air to air cooling mode and air to water cooling mode

In the combination cooling mode, in which the air to air cooling mode and the air to water cooling mode are simultaneously performed, shown in FIG. 12, the controller 202 of the heat pump 100 controls the first four-way valve 112a to form a flow path a1-a3 such that the heat pump 100 is operated in a cooling mode. Also, the controller 202 controls the second four-way valve 112b to form a flow path b1-b2 such that a high-temperature, high-pressure refrigerant, discharged from the compressor 108, does not flow to the indoor unit 104. In addition, the controller 202 controls the third four-way valve 112c to form a flow path c1-c3 such that the refrigerant, discharged from the compressor 108 and condensed by the outdoor heat exchanger 114, is supplied to the hydro unit 106. As a result, the high-temperature, high-pressure refrigerant, discharged from the compressor 108, is supplied to both the indoor unit 104 and the hydro unit 106, thereby simultaneously performing air to air cooling through the indoor unit 104 and air to water cooling through the hydro unit 106.

As shown in FIG. 12, the combination cooling mode of the air to air cooling mode and the air to water cooling mode may be performed irrespective of the heat recovery cooling/heating modes.

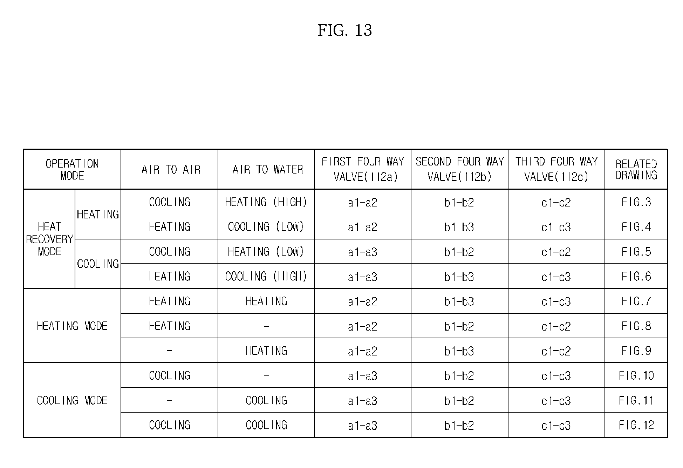

FIG. 13 is a view showing flow path switching of the first four-way valve 112a, the second four-way valve 112b, and the third four-way valve 112c in the respective operation modes of the heat pump shown in FIGS. 3 to 12.

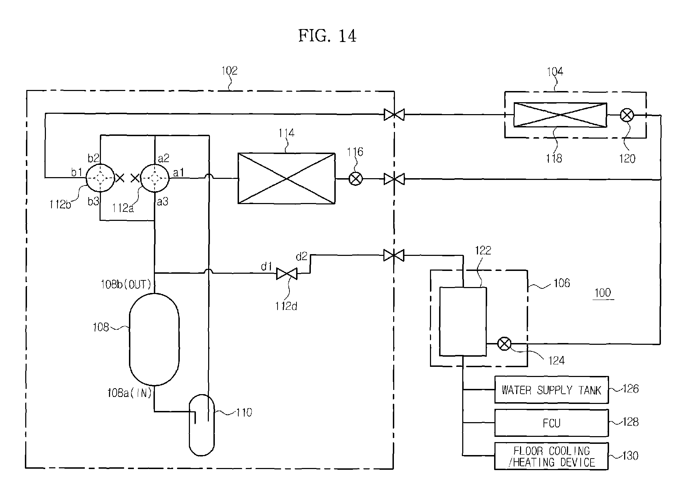

FIG. 14 is a view showing a heat pump 100 according to an embodiment. As shown in FIG. 14, the heat pump 100 includes an outdoor unit 102, an indoor unit 104, and a hydro unit 106. The outdoor unit 102, the indoor unit 104, and the hydro unit 106 are connected to one another via a refrigerant pipe to constitute a refrigerant cycle.

The outdoor unit 102 includes a compressor 108, an accumulator 110, refrigerant flow path switching members 112a, 112b, and 112d, an outdoor heat exchanger 114, and a first expansion device 116. The refrigerant flow path switching members 112a, 112b, and 112c include a first four-way valve 112a, a second four-way valve 112b, and a one-way valve 112d. The first expansion device 116 is realized by an electronic expansion valve. The first expansion device 116 expands a refrigerant, adjusts flow rate of the refrigerant, and interrupts flow of the refrigerant as needed. Another expansion device to perform the above functions may be used. The one-way valve 112d is not limited to a valve, through which a fluid flows only in one direction. The other port(s) of a two-way valve, a three-way valve, or a four-way valve may be closed such that the two-way valve, the three-way valve, or the four-way valve functions as a one-way valve.

The compressor 108 compresses a low-temperature, low-pressure refrigerant, suctioned through an inlet port 108a, and discharges a high-temperature, high-pressure refrigerant through an outlet port 108b. The compressor 108 may include a single inverter compressor, the compression capacity of which is changed depending upon input frequencies, or a plurality of constant-speed compressors having a fixed compression capacity. The inlet port 108a of the compressor 108 is connected to the accumulator 110. The outlet port 108b of the compressor 108 is connected to the first four-way valve 112a, the second four-way valve 112b, and the one-way valve 112d. The first four-way valve 112a and the second four-way valve 112b are also connected to the accumulator 110.

The refrigerant flow path switching members 112a, 112b, and 112d include the first four-way valve 112a, the second four-way valve 112b, and the one-way valve 112d. The refrigerant flow path switching members 112a, 112b, and 112d selectively switch refrigerant flow paths in a heat recovery mode, a heating mode, and a cooling mode to secure refrigerant flow paths corresponding to the respective modes.

The first four-way valve 112a performs switching between a flow path a1-a3 between the outlet port 108b of the compressor 108 and the outdoor heat exchanger 114 and a flow path a1-a2 between the inlet port 108a of the compressor 108 and the outdoor heat exchanger 114.

The second four-way valve m2b performs switching between a flow path b1-b3 between the outlet port 108b of the compressor 108 and the indoor unit 104 and a flow path b1-b2 between the inlet port 108a of the compressor 108 and the indoor unit 104. The one-way valve 112d opens or closes a flow path d1-d2 between the outlet port 108b of the compressor 108 and the hydro unit 106.

Each of the four-way valves 112a and 112b has four ports, through which a refrigerant flows. In this embodiment, one of the ports is closed, and the other three ports are used. In FIG. 14, one port of each of the four-way valves 112a and 112b denoted by X is closed. In this embodiment, therefore, three-way valves, each of which has a three port, may be used, or other valves functioning as the three-way valves may be also used. The refrigerant flow path switching members 112a, 112b, and 112d may be disposed inside or outside the outdoor unit 102.

The outdoor heat exchanger 114 functions as a condenser in a cooling mode and as an evaporator in a heating mode. The first expansion device 116 is connected to one side of the outdoor heat exchanger 114. At the outdoor heat exchanger 114 may be mounted an outdoor fan (not shown) to improve heat exchange efficiency between a refrigerant and outdoor air.

The indoor unit 104 includes an indoor heat exchanger 118 and a second expansion device 120. The indoor heat exchanger 118 functions as an evaporator in a cooling mode and as a condenser in a heating mode. The second expansion device 120 is connected to one side of the indoor heat exchanger 118. The second expansion device 120 is realized by an electronic expansion valve. The second expansion device 120 expands a refrigerant, adjusts flow rate of the refrigerant, and interrupts flow of the refrigerant as needed. Another expansion device to perform the above functions may be used. At the indoor heat exchanger 118 may be mounted an indoor fan (not shown) to improve heat exchange efficiency between a refrigerant and indoor air. According to circumstances, two or more indoor units 104 may be provided.

The hydro unit 106 heats water through heat exchange between a refrigerant and water such that the heated water is used for heating. The hydro unit 106 includes a hot water heat exchanger 122 and a third expansion device 124. Refrigerant heat exchange plates, through which a refrigerant flows, and water heat exchange plates, through which water flows, are alternately arranged in the hot water heat exchanger 122. Hot water is generated through heat exchange between the refrigerant heat exchange plates and the water heat exchange plates. A refrigerant, compressed by the compressor 108, is directly supplied to the hot water heat exchanger 122 of the hydro unit 106. The hot water generated by the hydro unit 106 is supplied to a water supply tank 126, a fan coil unit 128, and floor heating device 130 such that the hot water is used for hot water supply and heating. The third expansion device 124 is realized by an electronic expansion valve. The third expansion device 124 expands a refrigerant, adjusts flow rate of the refrigerant, and interrupts flow of the refrigerant as needed. Another expansion device to perform the above functions may be used.

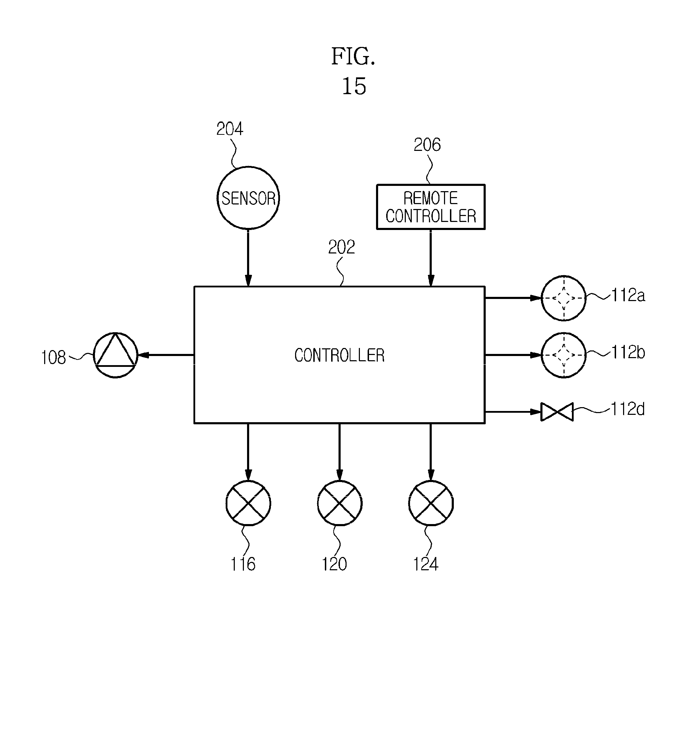

FIG. 15 is a view showing a control system of the heat pump shown in FIG. 14. As shown in FIG. 14, a controller 202 controls operations of the compressor 108, the first expansion device 116, the second expansion device 120, the third expansion device 124, the first four-way valve 112a, the second four-way valve 112b, and the one-way valve 112d based on signals input from a sensor 204 and a remote controller 206. The heat pump 100 performs a heating mode operation, a cooling mode operation, and a heat recovery mode operation according to the control of the controller 202.

In this embodiment, an air to air mode is a cooling/heating mode using the indoor unit 104. In the air to air mode, cooling/heating is performed through heat exchange between a refrigerant and air in the indoor unit 104. Also, an air to water mode is a heating mode using the hydro unit 106. In the air to water mode, heating is performed through heat exchange between a refrigerant and water in the hot water heat exchanger 122 of the hydro unit 106. In the air to water mode, heat exchange may be performed between air and the water having been heat-exchanged with the refrigerant to perform heating.

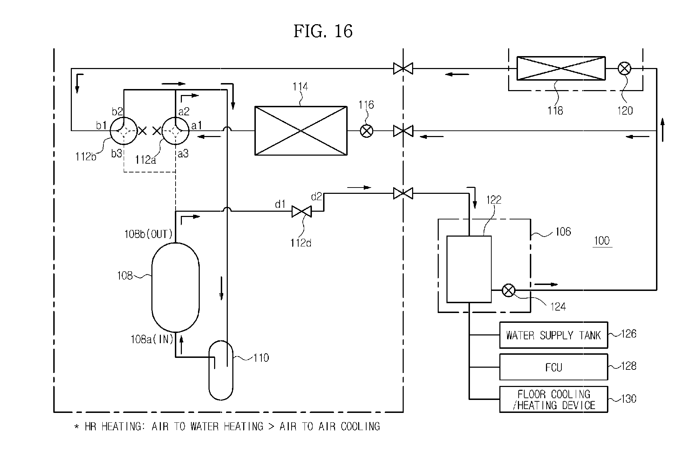

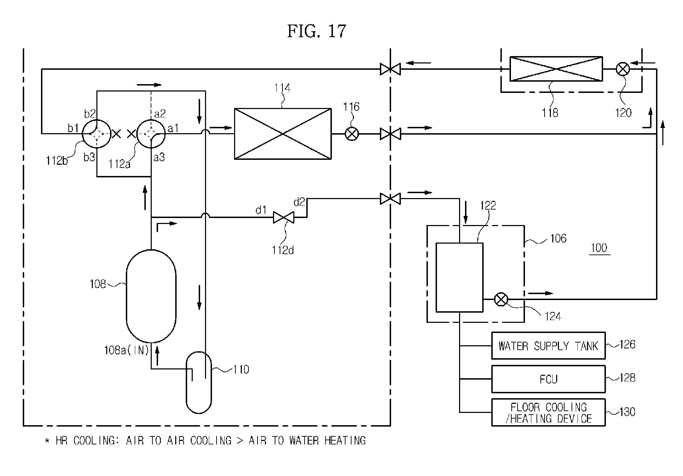

FIGS. 16 and 17 are views showing heat recovery heating and cooling modes of the heat pump according to an embodiment. FIG. 16 shows a heat recovery heating mode, and FIG. 17 shows a heat recovery cooling mode. Specifically, FIG. 16 is a view showing a refrigerant cycle in a heat recovery heating mode when a heating capacity in an air to water heating mode is greater than a cooling capacity in an air to air cooling mode (air to water heating > air to air cooling), and FIG. 17 is a view showing a refrigerant cycle in a heat recovery cooling mode when a cooling capacity in an air to air cooling mode is greater than a heating capacity in an air to water heating mode (air to air cooling > air to water heating). In the heat recovery mode shown in FIG. 16, the controller 202 controls the refrigerant flow path switching members 112a, 112b, and 112d to switch the refrigerant flow paths among the compressor 108, the outdoor heat exchanger 114, the indoor unit 104, and the hydro unit 106 such that cooling and heating operations through the indoor unit 104 and the hydro unit 106 are simultaneously performed.

### Heat recovery heating mode: air to water heating > air to air cooling

In the heat recovery heating mode shown in FIG. 16, the controller 202 of the heat pump 100 controls the first four-way valve 112a to form a flow path a1-a2 such that the heat pump 100 is operated in a heating mode. Also, the controller 202 controls the second four-way valve 112b to form a flow path b1-b2 such that a high-temperature, high-pressure refrigerant, discharged from the compressor 108, does not flow to the indoor unit 104. In addition, the controller 202 controls the one-way valve 112d to form a flow path d1-d2 such that the high-temperature, high-pressure refrigerant, discharged from the compressor 108, flows to the hydro unit 106. As a result, the high-temperature, high-pressure refrigerant, discharged from the compressor 108, is supplied to the hydro unit 106, thereby performing air to water heating through the hydro unit 106. At this time, the refrigerant, heat-exchanged by the hydro unit 106, is supplied to the indoor unit 104 such that the refrigerant is used to perform an air to air cooling mode.

As shown in FIG. 16, the first four-way valve 112a, the second four-way valve 112b, and the one-way valve 112d may be controlled such that air to water heating and air to air cooling are simultaneously performed in the heat recovery heating mode. Also, opening degrees of the first expansion device 116 provided in the outdoor unit 102 and the second expansion device 120 provided in the indoor unit 104 may be controlled to adjust flow rate of the refrigerant introduced into the outdoor unit 102 and the indoor unit 104. Consequently, an air to water heating capacity of the hydro unit 106 and an air to air cooling capacity of the indoor unit 104 may be freely combined without loss within a range equivalent to 100 % the capacity of the outdoor unit 102 (In FIG. 16, air to water heating > air to air cooling). Also, only the indoor unit 104 for the air to air mode is used without the provision of an additional indoor unit for the air to water mode, thereby greatly reduce product cost and installation cost, time, and labor.

### Heat recovery cooling mode: air to air cooling > air to water heating

In the heat recovery cooling mode shown in FIG. 17, the controller 202 of the heat pump 100 controls the first four-way valve 112a to form a flow path a1-a3 such that the heat pump 100 is operated in a cooling mode. Also, the controller 202 controls the second four-way valve 112b to form a flow path b1-b2 such that a high-temperature, high-pressure refrigerant, discharged from the compressor 108, does not flow to the indoor unit 104. In addition, the controller 202 controls the one-way valve 112d to form a flow path d1-d2 such that the high-temperature, high-pressure refrigerant, discharged from the compressor 108, flows to the hydro unit 106. As a result, the refrigerant, discharged from the compressor 108 and condensed by the outdoor heat exchanger 114, is supplied to the indoor unit 104, thereby performing air to air cooling. Also, the high-temperature, high-pressure refrigerant, discharged from the compressor 108, is supplied to the hydro unit 106, thereby performing air to water heating through the hydro unit 106. At this time, the refrigerant, temperature of which has been lowered by the hydro unit 106, is recovered to the compressor 108 via the indoor unit 104.

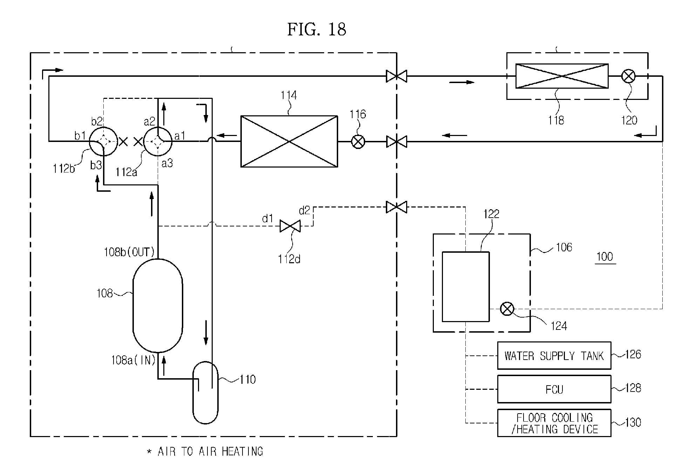

As shown in FIG. 17, the first four-way valve 112a, the second four-way valve 112b, and the one-way valve 112d may be controlled such that air to air cooling and air to water heating are simultaneously performed in the heat recovery cooling mode. Also, opening degrees of the first expansion device 116 provided in the outdoor unit 102, the second expansion device 120 provided in the indoor unit 104, and the third expansion device 124 provided in the hydro unit 106 may be controlled to adjust flow rate of the refrigerant introduced into the hydro unit 106 and the indoor unit 104. Consequently, an air to water heating capacity and an air to air cooling capacity may be freely combined without loss within a range equivalent to 100 % the capacity of the outdoor unit 102 (In FIG. 18, air to air cooling > air to water heating). Also, only the indoor unit 104 for the air to air mode is used without the provision of an additional indoor unit for the air to water mode, thereby greatly reduce product cost and installation cost, time, and labor.

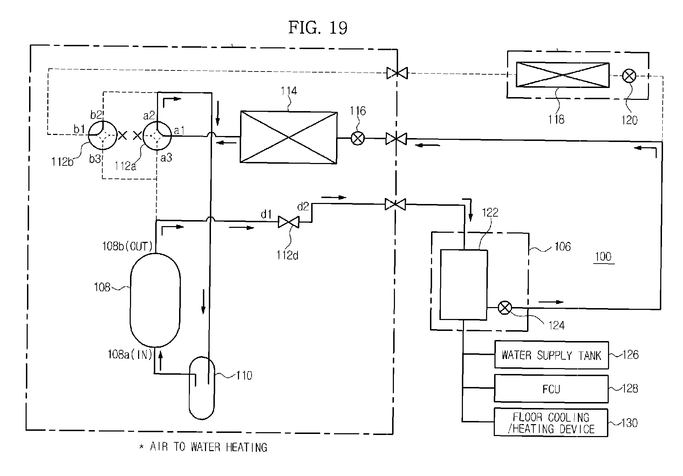

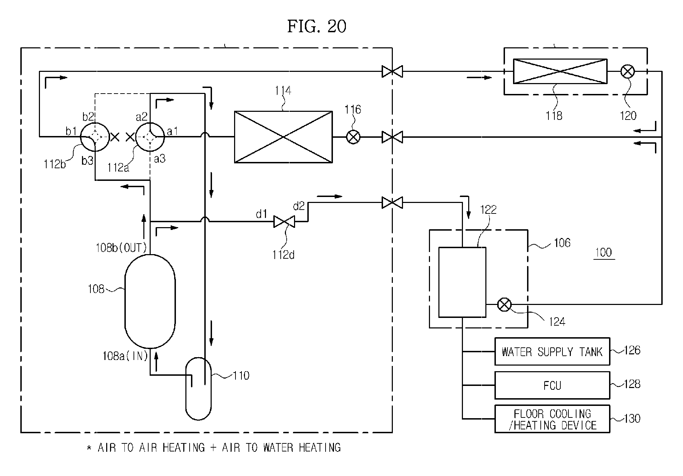

FIGS. 18 to 20 are views showing heating modes of the heat pump according to an embodiment. FIG. 18 is a view showing a heating mode to heat air in an air conditioning space through the indoor unit 104 (referred to as an air to air heating mode). FIG. 19 is a view showing a heating mode to perform heating using heated water in the hydro unit 106 (referred to as an air to water heating mode). FIG. 20 is a view showing a combination heating mode in which an air to air heating mode and an air to water heating mode are simultaneously performed.

### Air to air heating mode

In the air to air heating mode shown in FIG. 18, the controller 202 of the heat pump 100 controls the first four-way valve 112a to form a flow path a1-a2 such that the heat pump 100 is operated in a heating mode. Also, the controller 202 controls the second four-way valve 112b to form a flow path b1-b3 such that a high-temperature, high-pressure refrigerant, discharged from the compressor 108, flows to the indoor unit 104 such that the refrigerant is circulated between the outdoor unit 102 and the indoor unit 104. At this time, the one-way valve 112d and the third expansion device 124 of the hydro unit 106 are closed such that the refrigerant, having passed through the indoor unit 104, does not flow to the hydro unit 106. As a result, the high-temperature, high-pressure refrigerant, discharged from the compressor 108, is supplied only to the indoor unit 104, thereby independently performing air to air heating through the indoor unit 104.

As shown in FIG. 18, only the air to air heating mode may be independently performed irrespective of the heat recovery cooling/heating modes.

### Air to water heating mode

In the air to water heating mode shown in FIG. 19, the controller 202 of the heat pump 100 controls the first four-way valve 112a to form a flow path a1-a2 such that the heat pump 100 is operated in a heating mode. Also, the controller 202 controls the second four-way valve 112b to form a flow path b1-b2 such that a high-temperature, high-pressure refrigerant, discharged from the compressor 108, does not flow to the indoor unit 104. In addition, the controller 202 controls the one-way valve 112d to form a flow path d1-d2 such that the high-temperature, high-pressure refrigerant, discharged from the compressor 108, flows to the hydro unit 106. As a result, the high-temperature, high-pressure refrigerant, discharged from the compressor 108, is supplied only to the hydro unit 106, thereby independently performing air to water heating through the hydro unit 106.

As shown in FIG. 19, only the air to water heating mode may be independently performed irrespective of the heat recovery cooling/heating modes.
In the air to water heating mode, the indoor unit 104 is not used since heating is performed using the hydro unit 106. In FIG. 19, the second four-way valve 112b does not form a flow path b1-b3. As a result, the refrigerant, discharged from the compressor 108, does not flow to the indoor unit 104. If the refrigerant is introduced into the indoor unit 104, the amount of the refrigerant used for air to water heating is reduced in proportion to the amount of the refrigerant introduced into the indoor unit 104, whereby air to water heating efficiency is lowered. Even in a case in which only the air to water heating mode is independently performed, therefore, introduction of the refrigerant into the indoor unit 104 is interrupted by the second four-way valve 112b, thereby preventing lowering of air to water heating efficiency.

### Combination heating mode of air to air heating mode and air to water heating mode

In the combination heating mode, in which the air to air heating mode and the air to water heating mode are simultaneously performed, shown in FIG. 20, the controller 202 of the heat pump 100 controls the first four-way valve 112a to form a flow path a1-a2 such that the heat pump 100 is operated in a heating mode. Also, the controller 202 controls the second four-way valve 112b to form a flow path b1-b3 such that a high-temperature, high-pressure refrigerant, discharged from the compressor 108, flows to the indoor unit 104. In addition, the controller 202 controls the one-way valve 112d to form a flow path d1-d2 such that the high-temperature, high-pressure refrigerant, discharged from the compressor 108, flows to the hydro unit 106. As a result, the high-temperature, high-pressure refrigerant, discharged from the compressor 108, is supplied to both the indoor unit 104 and the hydro unit 106, thereby simultaneously performing air to air heating through the indoor unit 104 and air to water heating through the hydro unit 106.

As shown in FIG. 20, the combination heating mode of the air to air heating mode and the air to water heating mode may be performed irrespective of the heat recovery cooling/heating modes. In this case, opening degrees of the first expansion device 116 provided in the outdoor unit 102 and the second expansion device 120 provided in the indoor unit 104 may be controlled to adjust flow rate of the refrigerant introduced into the outdoor unit 102 and the indoor unit 104. Consequently, an air to water heating capacity and an air to air heating capacity may be freely combined without loss within a range equivalent to 100 % the capacity of the outdoor unit 102. If the sum of the air to water heating capacity and the air to air heating capacity exceeds 100 % the capacity of the outdoor unit 102, the controller 202 controls all flow paths of the one-way valve 112d to be closed while controlling the second four-way valve 112b to form the flow path b1-b3 such that the supply of the refrigerant to the hydro unit 106 is interrupted, thereby performing air to air heating first. When the air to air heating is performed to a predetermined level, the controller 202 controls all flow paths of the second four-way valve 112b to be closed and the one-way valve 112d to form the flow path d1-d2, thereby performing air to water heating.

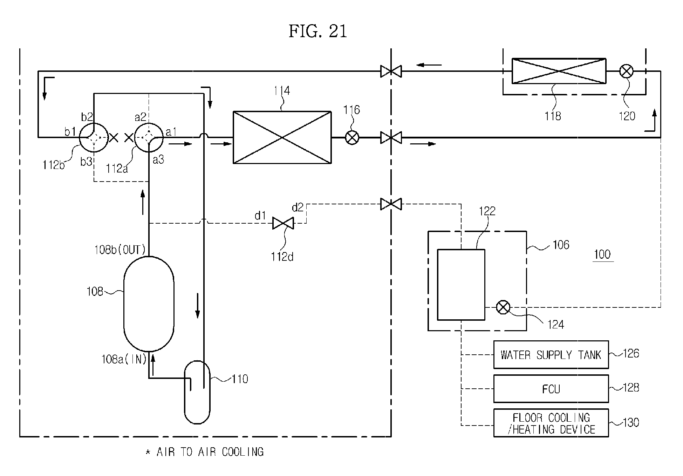

FIG. 21 is a view showing a cooling mode of the heat pump according to an embodiment. Specifically, FIG. 21 is a view showing a cooling mode to cool air in an air conditioning space through the indoor unit 104 to lower temperature in the air conditioning space (referred to as an air to air cooling mode).

### Air to air cooling mode

In the air to air cooling mode shown in FIG. 21, the controller 202 of the heat pump 100 controls the first four-way valve 112a to form a flow path a1-a3 such that the heat pump 100 is operated in a cooling mode. Also, the controller 202 controls the second four-way valve 112b to form a flow path b1-b2 such that a high-temperature, high-pressure refrigerant, discharged from the compressor 108, does not flow to the indoor unit 104. In addition, the controller 202 controls the one-way valve 112 to be closed such that the high-temperature, high-pressure refrigerant, discharged from the compressor 108, does not flow to the hydro unit 106. At this time, the third expansion device 124 of the hydro unit 106 is completely closed such that the refrigerant, discharged from the compressor 108 and condensed by the outdoor heat exchanger 114, is supplied only to the indoor unit 104, thereby independently performing air to air cooling through the indoor unit 104.

As shown in FIG. 21, only the air to air cooling mode may be independently performed irrespective of the heat recovery cooling/heating modes.

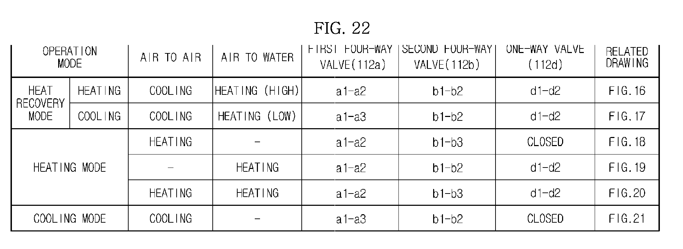

FIG. 22 is a view showing flow path switching of the first four-way valve 112a, the second four-way valve 112b, and the one-way valve 112d in the respective operation modes of the heat pump shown in FIGS. 16 to 21.

In an aspect of one or more embodiments, there is provided an air to air mode, which is a cooling/heating mode using the indoor unit, and an air to water mode, which is a cooling/heating mode using the hydro unit, which may be simultaneously performed in a heat recovery mode of the heat pump or which may be independently performed irrespective of the heat recovery mode of the heat pump.

In an aspect of one or more embodiments, there is provided that introduction of a refrigerant into the indoor unit, which is not operated, may be prevented when an air to water heating mode, which is a heating mode using the hydro unit, is performed irrespective of the heat recovery mode of the heat pump, thereby preventing efficiency of the indoor unit from being lowered due to the refrigerant collected in the indoor unit when the indoor unit is operated.

In an aspect of one or more embodiments, only heating may be performed in an air to water mode using the hydro unit. To this end, the refrigerant flow path switching member provided between the hydro unit and the compressor may be constituted by a one-way valve, thereby reducing cost and simplifying the structure of the heat pump.

Although a few embodiments have been shown and described, it would be appreciated by those skilled in the art that changes may be made in these embodiments without departing from the principles of the invention, the scope of which is defined in the claims.

## Claims

1. A heat pump comprising:
an outdoor unit comprising a compressor, an outdoor heat exchanger, and a first expansion valve;
an indoor unit comprising an indoor heat exchanger and a second expansion valve;
a hydro unit comprising a hot water heat exchanger and a third expansion valve, the hydro unit heating or cooling water through heat exchange between a refrigerant and the water;
a refrigerant flow path switching member to switch refrigerant flow paths among the compressor, the outdoor heat exchanger, the indoor unit, and the hydro unit such that heating and/or cooling through the indoor unit and the hydro unit is performed in a heat recovery mode to recover and reuse residual heat; and
a controller to control the refrigerant flow path switching member such that the heating and/or the cooling is performed in the heat recovery mode.

2. The heat pump according to claim 1, wherein the refrigerant flow path switching member comprises:
a first valve to form a first flow path between an outlet port of the compressor and the outdoor heat exchanger and a second flow path between an inlet port of the compressor and the outdoor heat exchanger and to perform switching between the first and second flow paths according to an operation mode;
a second valve to form a third flow path between the outlet port of the compressor and the indoor unit and a fourth flow path between the inlet port of the compressor and the indoor unit and to perform switching between the third and fourth flow paths according to the operation mode; and
a third valve to form a fifth flow path between the outlet port of the compressor and the hydro unit and a sixth flow path between the inlet port of the compressor and the hydro unit and to perform switching between the fifth and sixth flow paths according to the operation mode.

3. The heat pump according to claim 1, wherein the refrigerant flow path switching member comprises:
a first valve to form a first flow path between an outlet port of the compressor and the outdoor heat exchanger and a second flow path between an inlet port of the compressor and the outdoor heat exchanger and to perform switching between the first and second flow paths according to an operation mode;
a second valve to form a third flow path between the outlet port of the compressor and the indoor unit and a fourth flow path between the inlet port of the compressor and the indoor unit and to perform switching between the third and fourth flow paths according to the operation mode; and
a one-way valve to form a fifth flow path between the outlet port of the compressor and the hydro unit and to perform opening/closing the fifth flow path according to the operation mode.

4. A heat pump comprising:
an outdoor unit comprising a compressor, an outdoor heat exchanger, and a first expansion valve;
an indoor unit comprising an indoor heat exchanger and a second expansion valve;
a hydro unit comprising a hot water heat exchanger and a third expansion valve, the hydro unit heating or cooling water through heat exchange between a refrigerant and the water;
a refrigerant flow path switching member comprising a first valve to form a first flow path between an outlet port of the compressor and the outdoor heat exchanger and a second flow path between an inlet port of the compressor and the outdoor heat exchanger and to perform switching between the first and second flow paths, a second valve to form a third flow path between the outlet port of the compressor and the indoor unit and a fourth flow path between the inlet port of the compressor and the indoor unit and to perform switching between the third and fourth flow paths, and a third valve to form a fifth flow path between the outlet port of the compressor and the hydro unit and a sixth flow path between the inlet port of the compressor and the hydro unit and to perform switching between the flow paths; and
a controller to control the first to third valves to perform switching between the first through sixth flow paths such that simultaneous cooling and heating operations and/or simultaneous heating and cooling operations are performed in a heat recovery mode to recover and reuse residual heat.

5. The heat pump according to claim 4, wherein the controller controls the first valve to form the second flow path between the inlet port of the compressor and the outdoor heat exchanger, the second valve to form the fourth flow path between the inlet port of the compressor and the indoor unit, and the third valve to form the fifth flow path between the outlet port of the compressor and the hydro unit such that a refrigerant discharged from the compressor is supplied to both the outdoor heat exchanger and the indoor unit via the hydro unit, thereby simultaneously performing heating through the hydro unit (air to water heating) and cooling through the indoor unit (air to air cooling).

6. The heat pump according to claim 5, wherein the controller controls opening degrees of the first expansion valve provided in the outdoor unit and the second expansion valve provided in the indoor unit to adjust flow rate of the refrigerant introduced into the outdoor unit and the indoor unit, thereby adjusting a heating capacity of the hydro unit and a cooling capacity of the indoor unit.

7. The heat pump according to claim 4, wherein the controller controls the first valve to form the second flow path between the inlet port of the compressor and the outdoor heat exchanger, the second valve to form the third flow path between the outlet port of the compressor and the indoor unit, and the third valve to form the sixth flow path between the inlet port of the compressor and the hydro unit such that a refrigerant discharged from the compressor is supplied to both the outdoor heat exchanger and the hydro unit via the indoor unit, thereby simultaneously performing heating through the indoor unit (air to air heating) and cooling through the hydro unit (air to water cooling).

8. The heat pump according to claim 7, wherein the controller controls opening degrees of the first expansion valve provided in the outdoor unit and the third expansion valve provided in the hydro unit to adjust flow rate of the refrigerant introduced into the outdoor unit and the hydro unit, thereby adjusting a heating capacity of the indoor unit and a cooling capacity of the hydro unit.

9. The heat pump according to claim 4, wherein the controller controls the first valve to form the first flow path between the outlet port of the compressor and the outdoor heat exchanger, the second valve to form the fourth flow path between the inlet port of the compressor and the indoor unit, and the third valve to form the fifth flow path between the outlet port of the compressor and the hydro unit such that a refrigerant discharged from the compressor is supplied to the indoor unit via the outdoor heat exchanger and is directly supplied to the hydro unit, thereby simultaneously performing cooling through the indoor unit and heating through the hydro unit.

10. The heat pump according to claim 9, wherein the controller controls opening degrees of the first expansion valve provided in the outdoor unit, the second expansion valve provided in the indoor unit, and the third expansion valve provided in the hydro unit to adjust flow rate of the refrigerant introduced into the hydro unit and the indoor unit, thereby adjusting a heating capacity of the hydro unit and a cooling capacity of the indoor unit.

11. The heat pump according to claim 4, wherein the controller controls the first valve to form the first flow path between the outlet port of the compressor and the outdoor heat exchanger, the second valve to form the third flow path between the outlet port of the compressor and the indoor unit, and the third valve to form the sixth flow path between the inlet port of the compressor and the hydro unit such that a refrigerant discharged from the compressor is supplied to the hydro unit via the outdoor heat exchanger and is directly supplied to the indoor unit, thereby simultaneously performing cooling through the hydro unit and heating through the indoor unit and optionally the controller controls opening degrees of the first expansion valve provided in the outdoor unit, the second expansion valve provided in the indoor unit, and the third expansion valve provided in the hydro unit to adjust flow rate of the refrigerant introduced into the hydro unit and the indoor unit, thereby adjusting a cooling capacity of the hydro unit and a heating capacity of the indoor unit.

12. The heat pump according to claim 4, wherein the controller controls the first valve to form the second flow path between the inlet port of the compressor and the outdoor heat exchanger, the second valve to form the third flow path between the outlet port of the compressor and the indoor unit, the third valve to form the sixth flow path between the inlet port of the compressor and the hydro unit, and the third expansion valve provided in the hydro unit to be closed such that a refrigerant discharged from the compressor is recovered to the outdoor unit via the indoor unit, thereby independently performing heating through the indoor unit,
or wherein the controller controls the first valve to form the second flow path between the inlet port of the compressor and the outdoor heat exchanger, the second valve to form the fourth flow path between the inlet port of the compressor and the indoor unit, the third valve to form the fifth flow path between the outlet port of the compressor and the hydro unit, and the second expansion valve provided in the indoor unit to be closed such that a refrigerant discharged from the compressor is recovered to the outdoor unit via the hydro unit, thereby independently performing heating through the hydro unit,
or wherein the controller controls the first valve to form the second flow path between the inlet port of the compressor and the outdoor heat exchanger, the second valve to form the third flow path between the outlet port of the compressor and the indoor unit, and the third valve to form the fifth flow path between the outlet port of the compressor and the hydro unit such that a refrigerant discharged from the compressor is supplied to both the indoor unit and the hydro unit, thereby performing heating through both the indoor unit and the hydro unit, and controls opening degrees of the second expansion valve provided in the indoor unit and the third expansion valve provided in the hydro unit to adjust a heating capacity of the indoor unit and a heating capacity of the hydro unit, and optionally wherein, if a sum of the heating capacity of the hydro unit and the heating capacity of the indoor unit exceeds 100% of a capacity of the outdoor unit, the controller controls the fifth and sixth flow paths of the third valve to be closed while controlling the second valve to form the third flow path between the outlet port of the compressor and the indoor unit such that supply of the refrigerant to the hydro unit is interrupted, thereby performing heating through the indoor unit first, and, when the heating through the indoor unit is performed to a predetermined level, the controller controls the third and fourth flow paths of the second valve to be closed and the third valve to form the fifth flow path between the outlet port of the compressor and the hydro unit, thereby performing heating through the hydro unit,
or wherein the controller controls the first valve to form the first flow path between the outlet port of the compressor and the outdoor heat exchanger, the second valve to form the fourth flow path between the inlet port of the compressor and the indoor unit, the third valve to form the sixth flow path between the inlet port of the compressor and the hydro unit, and the third expansion valve provided in the hydro unit to be closed such that a refrigerant discharged from the compressor is supplied to the indoor unit via the outdoor heat exchanger, thereby independently performing cooling through the indoor unit,
or wherein the controller controls the first valve to form the first flow path between the outlet port of the compressor and the outdoor heat exchanger, the second valve to form the fourth flow path between the inlet port of the compressor and the indoor unit, the third valve to form the sixth flow path between the inlet port of the compressor and the hydro unit, and the second expansion valve provided in the indoor unit to be closed such that a refrigerant discharged from the compressor is supplied to the hydro unit via the outdoor heat exchanger, thereby independently performing cooling through the hydro unit,
or wherein the controller controls the first valve to form the first flow path between the outlet port of the compressor and the outdoor heat exchanger, the second valve to form the fourth flow path between the inlet port of the compressor and the indoor unit, and the third valve to form the sixth flow path between the inlet port of the compressor and the hydro unit such that a refrigerant discharged from the compressor is supplied to both the indoor unit and the hydro unit via the outdoor heat exchanger, thereby performing cooling through both the indoor unit and the hydro unit.

13. A control method of a heat pump comprising an outdoor unit, an indoor unit, and a hydro unit to heat or cool water through heat exchange between a refrigerant and the water, the control method comprising:
controlling a first valve to form a first flow path between an outlet port of the compressor and the outdoor heat exchanger and a second flow path between an inlet port of the compressor and the outdoor heat exchanger and to perform switching between the first and second flow paths according to an operation mode;
controlling a second valve to form a third flow path between the outlet port of the compressor and the indoor unit and a fourth flow path between the inlet port of the compressor and the indoor unit and to perform switching between the third and fourth flow paths according to the operation mode;
controlling a third valve to form a fifth flow path between the outlet port of the compressor and the hydro unit and a sixth flow path between the inlet port of the compressor and the hydro unit and to perform switching between the fifth and sixth flow paths according to the operation mode; and
controlling the first, second, and third valves to perform switching between the first through sixth flow paths such that simultaneous cooling and heating operations and/or simultaneous heating and cooling operations are performed in a heat recovery mode to recover and reuse residual heat.

14. A heat pump comprising:
an outdoor unit comprising a compressor, an outdoor heat exchanger, and a first expansion valve;
an indoor unit comprising an indoor heat exchanger and a second expansion valve;
a hydro unit comprising a hot water heat exchanger and a third expansion valve, the hydro unit heating or cooling water through heat exchange between a refrigerant and the water;
a refrigerant flow path switching member comprising a first valve to form a first flow path between an outlet port of the compressor and the outdoor heat exchanger and a second flow path between an inlet port of the compressor and the outdoor heat exchanger and to perform switching between the first and second flow paths, a second valve to form a third flow path between the outlet port of the compressor and the indoor unit and a fourth flow path between the inlet port of the compressor and the indoor unit and to perform switching between the third and fourth flow paths, and a one-way valve to form a fifth flow path between the outlet port of the compressor and the hydro unit and to perform opening/closing of the fifth flow path; and
a controller to control the first valve, the second valve and the one-way valve to perform switching between the first through sixth flow paths such that simultaneous cooling and heating operations and/or simultaneous heating and cooling operations are performed in a heat recovery mode to recover and reuse residual heat, optionally wherein the controller controls the first valve to form the second flow path between the inlet port of the compressor and the outdoor heat exchanger, the second valve to form the fourth flow path between the inlet port of the compressor and the indoor unit, and the one-way valve to form the fifth flow path between the outlet port of the compressor and the hydro unit such that a refrigerant discharged from the compressor is supplied to both the outdoor heat exchanger and the indoor unit via the hydro unit, thereby simultaneously performing heating through the hydro unit (air to water heating) and cooling through the indoor unit (air to air cooling), and optionally wherein the controller controls opening degrees of the first expansion valve provided in the outdoor unit and the second expansion valve provided in the indoor unit to adjust flow rate of the refrigerant introduced into the outdoor unit and the indoor unit, thereby adjusting a heating capacity of the hydro unit and a cooling capacity of the indoor unit,
or wherein the controller controls the first valve to form the first flow path between the outlet port of the compressor and the outdoor heat exchanger, the second valve to form the fourth flow path between the inlet port of the compressor and the indoor unit, and the one-way valve to form the fifth flow path between the outlet port of the compressor and the hydro unit such that a refrigerant discharged from the compressor is supplied to the indoor unit via the outdoor heat exchanger and is directly supplied to the hydro unit, thereby simultaneously performing cooling through the indoor unit (air to air cooling) and heating through the hydro unit (air to water heating) and optionally wherein the controller controls opening degrees of the first expansion valve provided in the outdoor unit, the second expansion valve provided in the indoor unit, and the third expansion valve provided in the hydro unit to adjust flow rate of the refrigerant introduced into the hydro unit and the indoor unit, thereby adjusting a heating capacity of the hydro unit and a cooling capacity of the indoor unit,
or wherein the controller controls the first valve to form the second flow path between the inlet port of the compressor and the outdoor heat exchanger, the second valve to form the third flow path between the outlet port of the compressor and the indoor unit, the one-way valve to be closed such that the sixth flow path between the inlet port of the compressor and the hydro unit is not formed, and the third expansion valve provided in the hydro unit to be closed such that a refrigerant discharged from the compressor is recovered to the outdoor unit via the indoor unit, thereby independently performing heating through the indoor unit (air to air heating),
or wherein the controller controls the first valve to form the second flow path between the inlet port of the compressor and the outdoor heat exchanger, the second valve to form the fourth flow path between the inlet port of the compressor and the indoor unit, the one-way valve to form the fifth flow path between the outlet port of the compressor and the hydro unit, and the second expansion valve provided in the indoor unit to be closed such that a refrigerant discharged from the compressor is recovered to the outdoor unit via the hydro unit, thereby independently performing heating through the hydro unit (air to water heating),
or wherein the controller controls the first valve to form the second flow path between the inlet port of the compressor and the outdoor heat exchanger, the second valve to form the third flow path between the outlet port of the compressor and the indoor unit, and the one-way valve to form the fifth flow path between the outlet port of the compressor and the hydro unit such that a refrigerant discharged from the compressor is supplied to both the indoor unit and the hydro unit, thereby performing heating through both the indoor unit and the hydro unit (air to air heating + air to water heating), and controls opening degrees of the second expansion valve provided in the indoor unit and the third expansion valve provided in the hydro unit to adjust a heating capacity of the indoor unit and a heating capacity of the hydro unit, and optionally wherein, if a sum of the heating capacity of the hydro unit and the heating capacity of the indoor unit exceeds 100% a capacity of the outdoor unit, the controller controls the fifth flow path of the one-way valve to be closed while controlling the second valve to form the third flow path between the outlet port of the compressor and the indoor unit such that supply of the refrigerant to the hydro unit is interrupted, thereby performing heating through the indoor unit first, and, when the heating through the indoor unit is performed to a predetermined level, the controller controls third and fourth flow paths of the second valve to be closed and the one-way valve to form the fifth flow path between the outlet port of the compressor and the hydro unit, thereby performing heating through the hydro unit,
or wherein the controller controls the first valve to form the first flow path between the outlet port of the compressor and the outdoor heat exchanger, the second valve to form the fourth flow path between the inlet port of the compressor and the indoor unit, the one-way valve to be closed, and the third expansion valve provided in the hydro unit to be closed such that a refrigerant discharged from the compressor is supplied to the indoor unit via the outdoor heat exchanger, thereby independently performing cooling through the indoor unit (air to air cooling).

15. A control method of a heat pump comprising an outdoor unit, an indoor unit, and a hydro unit to heat water through heat exchange between a refrigerant and the water, the control method comprising:
controlling a first valve to form a first flow path between an outlet port of the compressor and the outdoor heat exchanger and a second flow path between an inlet port of the compressor and the outdoor heat exchanger and to perform switching between the first and second flow paths according to an operation mode;
controlling a second valve to form a third flow path between the outlet port of the compressor and the indoor unit and a fourth flow path between the inlet port of the compressor and the indoor unit and to perform switching between the third and fourth flow paths according to the operation mode;
controlling a one-way valve to form a fifth flow path between the outlet port of the compressor and the hydro unit and to open or close the flow path according to the operation mode; and
controlling the first valve, the second valve, and the one-way valve to perform switching between the first through fifth flow paths such that simultaneous cooling and heating operations are performed in a heat recovery mode to recover and reuse residual heat.
